(19) 

Europäisches
Patentamt
European
Patent Office
Office européen
des brevets

(11) **EP 4 443 776 A1**

(12) **EUROPEAN PATENT APPLICATION**
published in accordance with Art. 153(4) EPC

(43) Date of publication:
**09.10.2024 Bulletin 2024/41**

(21) Application number: **22897907.6**

(22) Date of filing: **25.11.2022**

(51) International Patent Classification (IPC):
***H04B 17/382*** (2015.01)

(52) Cooperative Patent Classification (CPC):
**G01S 13/95; H04B 7/22; H04B 17/382;
H04B 17/391; H04W 4/021; H04W 24/10;
Y02A 90/10**

(86) International application number:
**PCT/CN2022/134219**

(87) International publication number:
**WO 2023/093825 (01.06.2023 Gazette 2023/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.11.2021 CN 202111434034**

(71) Applicant: **Vivo Mobile Communication Co., Ltd.
Dongguan, Guangdong 523863 (CN)**

(72) Inventors:
- **DING, Shengli**
  **Dongguan, Guangdong 523863 (CN)**
- **JIANG, Dajie**
  **Dongguan, Guangdong 523863 (CN)**
- **YUAN, Yannan**
  **Dongguan, Guangdong 523863 (CN)**
- **YAO, Jian**
  **Dongguan, Guangdong 523863 (CN)**

(74) Representative: **Murgitroyd & Company
165-169 Scotland Street
Glasgow G5 8PL (GB)**

(54) **WEATHER SENSING METHOD AND APPARATUS, AND COMMUNICATION DEVICE AND STORAGE MEDIUM**

(57) This application pertains to the field of communications technologies, and discloses a weather sensing method and apparatus, a communication device, and a storage medium. The weather sensing method in embodiments of this application includes: in a case that a first condition is met, performing, by a first communication device, weather sensing to obtain sensing and measurement data or a sensing result; and reporting, by the first communication device, the sensing and measurement data or the sensing result to a second communication device, where the first condition includes at least one of the following that: sensing requirement information is received from the second communication device, where the sensing requirement information is used to request the weather sensing; and a periodic sensing time arrives.

In a case that a first condition is met, a first communication device performs weather sensing to obtain sensing and measurement data or a sensing result — 400

The first communication device reports the sensing and measurement data or the sensing result to a second communication device — 401

FIG. 4

EP 4 443 776 A1

**Description**

**CROSS-REFERENCE TO RELATED APPLICATION**

This application claims priority to Chinese Patent Application No. 2021114340348, filed on November 29, 2021 and entitled "WEATHER SENSING METHOD AND APPARATUS, COMMUNICATION DEVICE, AND STORAGE MEDIUM", which is incorporated herein by reference in its entirety.

**TECHNICAL FIELD**

This application pertains to the field of communications technologies, and specifically relates to a weather sensing method and apparatus, a communication device, and a storage medium.

**BACKGROUND**

A weather radar has advantages in weather detection, for example, having a high temporal resolution and a high spatial resolution, and being capable of detecting distribution of meteorological target areas. However, deployment costs of the weather radar are high. In addition, due to a long scanning cycle, high transmit power, a short continuous working time, and a need for cooling time, the weather radar cannot meet a user requirement for knowing about weather in real time (below a minute level).

**SUMMARY**

Embodiments of this application provide a weather sensing method and apparatus, a communication device, and a storage medium in an integrated communication and sensing scenario, to resolve a problem that a user cannot know about weather in a designated area in real time.

According to a first aspect, a weather sensing method is provided. The method is applied to a first communication device and includes:

in a case that a first condition is met, performing, by a first communication device, weather sensing to obtain sensing and measurement data or a sensing result; and
reporting, by the first communication device, the sensing and measurement data or the sensing result to a second communication device, where
the first condition includes at least one of the following that:

sensing requirement information is received from the second communication device, where the sensing requirement information is used to request the weather sensing; and
a periodic sensing time arrives.

According to a second aspect, a weather sensing method is provided. The method is applied to a second communication device and includes:

receiving, by a second communication device, sensing requirement information sent by a third communication device, where the sensing requirement information is used to request weather sensing;
determining, by the second communication device based on the sensing requirement information, at least one first communication device for performing weather sensing;
forwarding, by the second communication device, the sensing requirement information to the first communication device; and
receiving, by the second communication device, sensing and measurement data or a sensing result reported by the first communication device;
or
periodically receiving, by the second communication device, sensing and measurement data or a sensing result reported by the first communication device.

According to a third aspect, a weather sensing method is provided. The method is applied to a third communication device and includes:

receiving, by a third communication device, a first input performed by a user on a first application; and

sending, by the third communication device in response to the first input, sensing requirement information to a second communication device through a server connected to the first application, where
the sensing requirement information is used to request weather sensing.

According to a fourth aspect, a weather sensing apparatus is provided. The apparatus includes:

a weather sensing module, configured to perform weather sensing to obtain sensing and measurement data or a sensing result in a case that a first condition is met; and
a first sending module, configured to report the sensing and measurement data or the sensing result to a second communication device, where
the first condition includes at least one of the following that:

sensing requirement information is received from the second communication device, where the sensing requirement information is used to request the weather sensing; and
a periodic sensing time arrives.

According to a fifth aspect, a weather sensing apparatus is provided. The apparatus includes:

a first receiving module, configured to receive sensing requirement information sent by a third communication device, where the sensing requirement information is used to request weather sensing;
a selection module, configured to determine, based on the sensing requirement information, at least one first communication device for performing weather sensing;
a second sending module, configured to forward the sensing requirement information to the first communication device; and
a second receiving module, configured to receive sensing and measurement data or a sensing result reported by the first communication device;
or
a third receiving module, configured to periodically receive sensing and measurement data or a sensing result reported by the first communication device.

According to a sixth aspect, a weather sensing apparatus is provided. The apparatus includes:

a fourth receiving module, configured to receive a first input performed by a user on a first application; and
a first processing module, configured to send, in response to the first input, sensing requirement information to a second communication device through a server connected to the first application, where
the sensing requirement information is used to request weather sensing.

According to a seventh aspect, a first communication device is provided. The terminal includes a processor and a memory. A program or instructions are stored in the memory and executable on the processor. When the program or the instructions are executed by the processor, steps of the weather sensing method according to the first aspect are implemented.
According to an eighth aspect, a first communication device is provided and includes a processor and a communication interface. The processor is configured to: in a case that a first condition is met, perform weather sensing to obtain sensing and measurement data or a sensing result. The communication interface is configured to report the sensing and measurement data or the sensing result to a second communication device, where the first condition includes at least one of the following that: sensing requirement information is received from the second communication device, where the sensing requirement information is used to request the weather sensing; and a periodic sensing time arrives.
According to a ninth aspect, a second communication device is provided. The second communication device includes a processor and a memory. A program or instructions are stored in the memory and executable on the processor. When the program or instructions are executed by the processor, steps of the weather sensing method according to the second aspect are implemented.
According to a tenth aspect, a second communication device is provided and includes a processor and a communication interface. The communication interface is configured to receive sensing requirement information sent by a third communication device, where the sensing requirement information is used to request weather sensing. The processor is configured to determine, based on the sensing requirement information, at least one first communication device for performing weather sensing. The communication interface is further configured to forward the sensing requirement information to the first communication device. The communication interface is further configured to receive sensing and measurement data or a sensing result reported by the first communication device; or the communication interface is configured to periodically receive sensing and measurement data or a sensing result reported by the first communication device.

According to an eleventh aspect, a third communication device is provided. The third communication device includes a processor and a memory. A program or instructions are stored in the memory and executable on the processor. When the program or the instructions are executed by the processor, steps of the weather sensing method according to the third aspect are implemented.

According to a twelfth aspect, a third communication device is provided and includes a processor and a communication interface. The processor is configured to: receive a first input performed by a user on a first application; and send, in response to the first input, sensing requirement information to a second communication device through a server connected to the first application.

According to a thirteenth aspect, a weather sensing system is provided and includes a first communication device, a second communication device, and a third communication device. The first communication device may be configured to perform the steps of the foregoing weather sensing method according to the first aspect. The second communication device may be configured to perform the steps of the foregoing weather sensing method according to the second aspect. The third communication device may be configured to perform the steps of the foregoing weather sensing method according to the third aspect.

According to a fourteenth aspect, a readable storage medium is provided. The readable storage medium stores a program or instructions. When the program or instructions are executed by a processor, the steps of the method according to the first aspect are implemented, or the steps of the method according to the second aspect are implemented, or the steps of the method according to the third aspect are implemented.

According to a fifteenth aspect, a chip is provided. The chip includes a processor and a communication interface. The communication interface is coupled to the processor. The processor is configured to run a program or instructions to implement the method according to the first aspect, or implement the method according to the second aspect, or implement the method according to the third aspect.

According to a sixteenth aspect, a computer program or program product is provided. The computer program or program product is stored in a storage medium. The computer program or program product is executed by at least one processor to implement the steps of the weather sensing method according to the first aspect, or implement the steps of the weather sensing method according to the second aspect, or implement the steps of the weather sensing method according to the third aspect.

In the embodiments of this application, the first communication device performs weather sensing based on a user requirement or periodically to obtain the sensing and measurement data or the sensing result, thereby implementing weather detection based on self-transmission and self-reception by the communication device, and meeting the user requirement for knowing about weather in a designated area in real time.

## BRIEF DESCRIPTION OF DRAWINGS

FIG. 1 is a block diagram of a wireless communication system to which an embodiment of this application may be applied;
FIG. 2 is a schematic diagram of a single-station radar and a dual-station radar;
FIG. 3 is a schematic diagram of a radar echo volume scattering model according to an embodiment of this application;
FIG. 4 is a first schematic flowchart of a weather sensing method according to an embodiment of this application;
FIG. 5 is a schematic diagram of rainfall detection initiated by a third-party application according to an embodiment of this application;
FIG. 6 is a schematic diagram of rainfall monitoring periodically performed by a first communication device according to an embodiment of this application;
FIG. 7 is a schematic diagram of data preprocessing performed on a result of a feature analysis of threshold-crossing distance resolution cells according to an embodiment of this application;
FIG. 8 is a second schematic flowchart of a weather sensing method according to an embodiment of this application;
FIG. 9 is a third schematic flowchart of a weather sensing method according to an embodiment of this application;
FIG. 10 is a fourth schematic flowchart of a weather sensing method according to an embodiment of this application;
FIG. 11 is a first schematic diagram of a structure of a weather sensing apparatus according to an embodiment of this application;
FIG. 12 is a second schematic diagram of a structure of a weather sensing apparatus according to an embodiment of this application;
FIG. 13 is a third schematic diagram of a structure of a weather sensing apparatus according to an embodiment of this application;

FIG. 14 is a fourth schematic diagram of a structure of a weather sensing apparatus according to an embodiment of this application;

FIG. 15 is a schematic diagram of a structure of a communication device according to an embodiment of this application;

FIG. 16 is a schematic diagram of a hardware structure of a terminal for implementing an embodiment of this application;

FIG. 17 is a first schematic diagram of a hardware structure of a network-side device for implementing an embodiment of this application; and

FIG. 18 is a second schematic diagram of a hardware structure of a network-side device for implementing an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specified order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

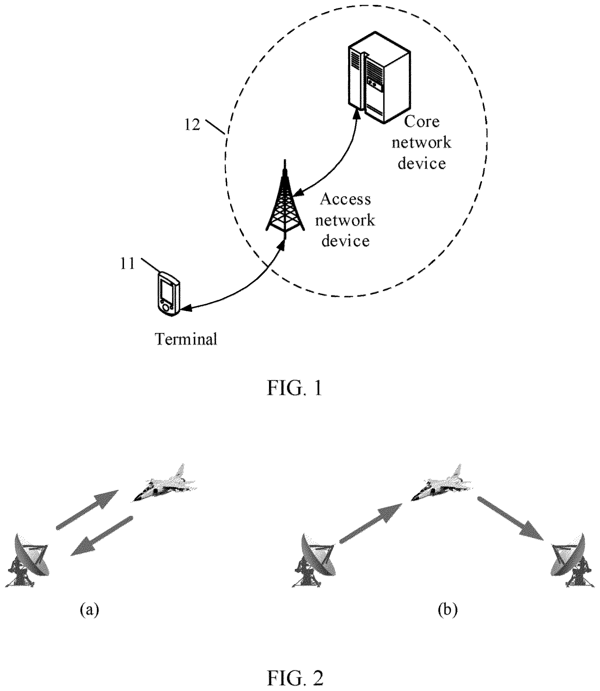

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network element. The access network device may include a base station, a WLAN access point, a Wi-Fi node, or the like. The base station may be referred to a s a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that in the embodiments of this application, only a core network device in the NR system is used as an example for description, but a specific type of the core network device is not limited.

The following first describes related content in the embodiments of this application.

(1) Integrated communication and sensing or integrated sensing and communication:

In the future, beyond fifth generation (Beyond fifth generation, B5G) and 6G wireless communication systems are expected to provide various high-precision sensing services, such as indoor positioning for robot navigation, Wi-Fi sensing for a smart home, and radar sensing for a self-driving vehicle. A sensing system and a communication system are normally designed separately and occupy different frequency bands. Then, due to wide deployment of millimeter wave and massive multi-input multi-output (Multi-input multi-output, MIMO) technologies, communication signals in a future wireless communication system tend to have high resolutions in both time domain and angle domain. This makes it possible to use communication signals to implement high-precision sensing. Therefore, preferably, the sensing system and the communication system should be jointly designed, so that the two systems can share a same frequency band and hardware to improve frequency efficiency and reduce hardware costs. This promotes research on integrated communication and sensing (Integrated Sensing And Communication, ISAC). ISAC will become a key technology in the future wireless communication system to support many important application scenarios. For example, in a future self-driving vehicle network, a self-driving vehicle will obtain a large amount of information from the network, including an ultra-high-resolution map and near-real-time information, to navigate and avoid an upcoming traffic jam. In the same situation, a radar sensor in the self-driving vehicle should be able to provide a powerful high-resolution obstacle detection function with a centimeter-level resolution. The ISAC technology used for self-driving vehicles makes it possible to use the same hardware and spectrum resources to implement high data rate communication and high-resolution obstacle detection. Other applications of ISAC include indoor positioning and activity recognition based on Wi-Fi, communication and sensing of unmanned aerial vehicles, XR, radar-communication integration, and the like. Each application has different requirements, limitations, and regulatory issues. ISAC has attracted great research interest and attention from academia and industry. For example, there have been more academic publications on ISAC recently, ranging from transceiver architecture design, ISAC waveform design, joint coding design, and time-frequency-space signal processing, to experimental performance delay, prototype design, and field testing.

ISAC achieves integrated low-cost implementation of the two functions of communication and sensing through hardware device sharing and software-defined functions. Main features of ISAC are: 1. unified and simplified architecture; 2. reconfigurable and scalable functions; and 3. efficiency improvement and cost reduction. Advantages of integrated communication and sensing mainly include three aspects: 1. device cost reduction and size reduction; 2. spectrum utilization improvement; and 3. system performance improvement.

The academia usually divides development of ISAC into four stages: coexistence, co-operation, co-design, and collaboration.

Coexistence: Communication and sensing are two separate systems and interfere with each other. Main methods for resolving the interference are: distance isolation, frequency band isolation, time division working, the MIMO technology, precoding, and the like.

Co-operation: Communication and sensing share a hardware platform and use shared information to improve common performance. Power allocation between the two has great impact on system performance. Main problems are: a low signal-to-noise ratio, mutual interference, and a low throughput.

Co-design: Communication and sensing become a complete joint system, including joint signal design, waveform design, coding design, and the like. At an early stage, there are linear frequency modulation waveforms, spread spectrum waveforms, and the like. Later, the system focuses on orthogonal frequency division multiplexing (Orthogonal Frequency Division Multiplexing, OFDM) waveforms, the MIMO technology, and the like.

Collaboration: A plurality of integrated communication and sensing nodes collaborate with each other to achieve common goals. For example, radar detection information is shared through communication data transmission. Typical scenarios include a driver assistance system, radar-assisted communication, and the like.

Currently, typical integrated communication and sensing scenarios that are expected to be implemented through technological upgrades based on a 5G communication system architecture are shown in the following Table 1.

**Table 1 Typical integrated communication and sensing scenarios**

| Wireless sensing category | Sensing function | Application purpose |
|---|---|---|
| Large-scale macro sensing | Weather, air quality, and the like | Meteorology, agriculture, and life service |
| | Vehicular flow (crossing), and pedestrian flow (metro entrance) | Smart city, intelligent transportation, and commercial service |
| | Animal activity, migration, and the like | Animal husbandry, ecological and environmental protection, and the like |
| | Target tracking, ranging, speed measurement, contour, and the like | Many application scenarios of conventional radars |
| | Three-dimensional map construction | Intelligent driving, navigation, and smart city |
| Short-range refined sensing | Action and gesture recognition | Intelligent interaction, game, and smart home using a smartphone |
| | Heartbeat, respiration, and the like | Health and medical care |
| | Imaging, material detection, and the like | Security, industry, and the like |

(2) Radar technology

Radar, transliterated from English Radar, originates from an acronym of radio detection and ranging, and means "radio detection and ranging". To be specific, by transmitting a radio wave and receiving an echo reflected by a target, the radar discovers the target and measures a distance to the target. With development of the radar technology, radar detection of a target not only measures a distance to the target, but also measures a speed, an azimuth, and a pitch angle of the target, and extracts more information about the target from the foregoing information, including a size, a shape, and the like of the target.

The radar technology was originally used for military purposes to detect aircraft, missiles, vehicles, ships, and other targets. With development of technologies and evolution of society, the radar is increasingly used in civil scenarios. A typical application is that a meteorological radar measures echoes of meteorological targets such as clouds and rain to determine locations, intensity, and other information about the clouds and rain for weather forecasting. Further, with booming of the electronic information industry, Internet of Things, communications technologies, and the like, the radar technology has begun to enter people's daily life applications. This greatly improves convenience and safety of work and life, and the like. For example, a radar on a vehicle, by measuring distances and relative speeds between vehicles, between the vehicle and surrounding objects, and between the vehicle and pedestrians, provides early warning information for vehicle driving, thereby greatly improving a safety level of road traffic.

Technically, radars are classified in a plurality of manners. Based on a position relationship between radar transceiver stations, radars may be classified into a single-station radar and a dual-station radar. FIG. 2 is a schematic diagram of a single-station radar and a dual-station radar, where (a) is the single-station radar, and (b) is the dual-station radar. For the single-station radar, a signal transmitter and a receiver are integrated and share an antenna. An advantage is that a target echo signal and a local oscillator of the receiver are naturally coherent and that signal processing is more convenient. A disadvantage is that signal transmission and reception cannot be performed simultaneously and that only a signal waveform with a specific duty cycle can be used. This causes blind spots in detection, and a complex algorithm needs to be used for compensation. Alternatively, signals can be transmitted and received simultaneously, with strict isolation between transmission and reception, but it is difficult to achieve this for a high-power military radar. For the dual-station radar, a signal transmitter and a receiver are located at different positions. An advantage is that signal transmission and reception can be performed simultaneously and that a continuous wave waveform can be used for detection. A disadvantage is that it is difficult to achieve a same frequency and coherence between the receiver and the transmitter and that signal processing is more complex.

In a wireless sensing application in integrated communication and sensing, the radar technology may use a single-station radar mode or a dual-station radar mode.

In the single-station radar mode, the same antenna is shared for transmitting and receiving signals, and the received and transmitted signals enter different radio frequency processing links through a circulator. In this mode, a continuous wave signal waveform can be used to implement detection without blind spots, provided that signal reception needs to be properly isolated from signal transmission, usually with approximately 100 dB isolation, to prevent the received signal from being flooded by leakage of the transmitted signal. Because the receiver in the single-station radar has all information about the transmitted signal, signal processing can be performed through matched filtering (pulse compression) to obtain a high signal processing gain.

In the dual-station radar mode, there is no problem of isolation between signal transmission and signal reception. Therefore, complexity of the hardware is greatly reduced. Because radar signal processing is based on known information, in an integrated communication and sensing application in 5G NR, known information such as a synchronization signal (primary synchronization signal (primary synchronization signal, PSS) or secondary synchronization signal (secondary synchronization signal, SSS)) or a reference signal (demodulation reference signal (demodulation reference signal, DMRS) or channel state information-reference signal (channel state information-reference signal, CSI-RS)) may be used to perform radar signal processing. However, due to periodicity of the synchronization signal, the reference signal, and the like, an ambiguous signal waveform graph is no longer a pushpin shape, but a nail plate shape. Delay and Doppler ambiguity increases, and a gain of a main lobe is greatly reduced in comparison with the single-station radar mode, and distance and speed measurement ranges are narrowed. A parameter set is appropriately designed, so that the distance and speed measurement ranges can meet requirements for measuring common targets such as vehicles and pedestrians. In addition, measurement accuracy of the dual-station radar is related to a position of a transceiver station relative to a target. An appropriate transceiver station pair needs to be selected to improve detection performance.

(3) Meteorological radar equation and scattering rate factor

1) Meteorological radar equation:

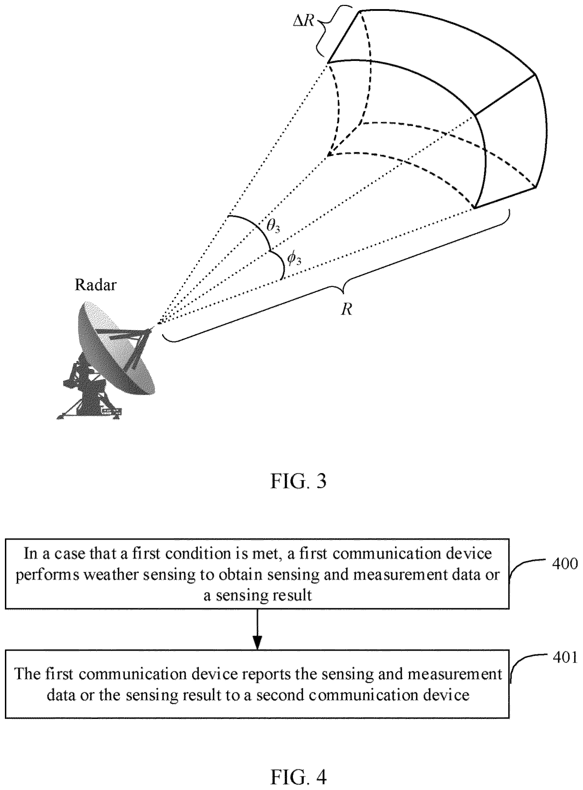

A radar echo formed by backscattering from a meteorological target, such as rain, snow, or hail, may be modeled as distributed scattering generated based on a three-dimensional volume. FIG. 3 is a schematic diagram of a radar echo volume scattering model according to an embodiment of this application. In the volume scattering model, a 3 dB width range of a radar beam is considered in azimuth and pitch dimensions, and a distance resolution cell range is considered in a radial distance dimension, to form a minimum resolvable volume scattering cell.

In a derivation process of the radar equation based on the volume scattering model, an integral operation in an angular dimension requires that an antenna pattern should be known. A Gaussian function is a commonly used antenna main lobe approximation model. In Gaussian approximation of the pattern, received power of a radar echo in the volume scattering model is:

$$P_r(t_0) = \frac{0.57 P_t G^2 \lambda^2 \eta \Delta R \theta_3 \phi_3}{(4\pi)^3 R^2 L_s L_a(R)} \qquad (1)$$

Meanings of various parameters in the formula (1) are as follows:

$P_t$ represents power of an electromagnetic wave radiated by the radar;
$G$ represents an antenna gain of the radar, where the antenna gain is related to an antenna array area and a wavelength of the radiated electromagnetic wave: $G = 4\pi A_e/\lambda^2$, where $A_e$ represents an effective area of an antenna;
$\lambda$ represents the wavelength of the electromagnetic wave radiated by the radar;
$\eta$ represents a volume scattering rate of a meteorological target, and its physical meaning is an RCS (radar cross section) of the meteorological target per cubic meter, in units of $m^2/m^3 = m^{-1}$, where assuming that an RCS of a differential volume cell $dV$ is $d\sigma$, $\eta = d\sigma/dV$;
$\Delta R$ represents a length of a distance resolution cell at a distance $R$ in a distance dimension;
R represents a center distance of a distance resolution cell;
$\theta_3$ represents a 3 dB width of a main lobe of the electromagnetic wave radiated by the radar in an azimuth dimension;
$\phi_3$ represents a 3 dB width of the main lobe of the electromagnetic wave radiated by the radar in a pitch dimension;
$L_s$ represents a system loss factor, which mainly includes a power loss caused by the radar system itself, including a loss caused by a transfer switch, a power splitter, a waveguide, or the like, where the loss is usually a fixed loss and may be measured before a device is delivered from a factory, and typically, it is 3 dB to 10 dB; and
$L_a$ represents atmospheric attenuation and is a function of distance, where a two-way loss of the target in decibels at the distance R (unit: m) is: $L_a(R)(dB) = 2 \alpha R/1000 \ (dB)$, where $\alpha$ is a one-way loss per km in decibels and is related to a frequency of the electromagnetic wave; herein, assuming that the atmospheric attenuation changes slowly within a distance resolution cell, an atmospheric attenuation coefficient within the distance resolution cell is a constant related to $R$.

From the formula (1), it can be learned that, unlike point scattering, a law of attenuation of received power in volume scattering with the distance is $R^2$, and not $R^4$. This is because a range of scatterers contributing to received power of the radar at any time depends on a size of a radar resolution cell, and the size of the resolution cell increases with $R$. When the distance is longer, broadening of an antenna beam causes the resolution cell size to increase in proportion to $R^2$.

2) Scattering rate factor

To represent scattering characteristics of a meteorological target (such as rain and snow), radar meteorology usually uses a normalization factor of a scattering rate, usually denoted by a symbol Z. An echo from the meteorological target is a volume scattering echo. An actually observed echo is a compound formed by backscattering of numerous raindrops, suspended water particles, hail, or snowflakes within the radar resolution cell. Because $Z$ is related only to a volume density and size of a scatterer, meteorologists prefer to use the scattering rate Z rather than the radar cross section $\eta$ as a parameter to represent radar echo intensity.

A water droplet is usually modeled as a small conductive sphere. When a sphere radius r is much smaller than a radar wavelength $\lambda$, and especially when $2\pi r/\lambda \ll 1$, the model is more accurate. In an FR1 frequency band in 5G NR, the wavelength is between 50 mm and 670 mm. Radii of raindrops are generally between 0.25 mm and 1.5 mm, mostly within a range of 0.35 mm to 0.45 mm, and occasionally greater than 2 mm. However, when a radius of a water droplet is greater than 3 mm, the water droplet sometimes breaks under the action of an airflow. Therefore, the condition of $2\pi r/\lambda \ll 1$ is met in the FR1 frequency band, which is consistent with a condition for applying a Rayleigh scattering model.

Assuming that radar echoes from various scatterers within a radar resolution cell are independent of each other and superimposed incoherently, the scattering rate factor is defined as:

$$Z = \frac{1}{\Delta V} \sum_{i=1}^{N} D_i^6 \qquad (2)$$

In the formula (2), $D_i$ is a diameter of a water droplet usually in units of mm, the scattering rate factor is in units of $mm^6/m^3$, $N$ represents a quantity of various backscatterers within the radar resolution cell, and $\Delta V$ is a volume cell. Because Z is observed to vary within a very large range, it is usually expressed in dB and denoted as dBZ.

The scattering rate factor Z may be obtained through calculation based on the volume scattering rate $\eta$:

$$Z = \frac{\lambda^4}{\pi^5 |K|^2} \cdot \eta \qquad (3)$$

where $K = (m^2 - 1)/(m^2 + 2)$, and $m$ represents a complex refractive index; the refractive index is a function of temperature and wavelength; however, when the wavelength is 3 cm to 10 cm (a radar frequency is between 3 GHz and 10 GHz), and the temperature is 0°C to 20°C, a value of $|K|^2$ is approximately a constant 0.93 for a scatterer formed by water; and a value of $|K|^2$ is approximately a constant 0.197 for a scatterer formed by ice.

Therefore, given a measurement value of the echo power within the radar resolution cell, the volume scattering rate $\eta$ can be estimated based on the radar equation in the volume scattering model, and then $\eta$ can be converted into the scattering rate factor $Z$. A value of the scattering rate factor $Z$ is related to water content in the air or an amount of rainfall. Currently, there are many models that can associate observed values of the scattering rate factor Z with the amount of rainfall. A most common model is provided in the following Table 2. The model is a model used in the NEXRAD national meteorological radar system in the U.S., showing six correspondences between observed values of Z (dBZ) and rainfall rates. A commercial Doppler meteorological radar used in television weather forecast uses a similar model.

**Table 2 Correspondence between dBZ scattering rate and rainfall rate**

| Level | Rainfall rate (mm/h) | Scattering rate (dBZ) | Category |
|-------|----------------------|------------------------|----------|
| 1 | 0.49 to 2.7 | $\geq 18$ and $< 30$ | Light rain |

(continued)

| Level | Rainfall rate (mm/h) | Scattering rate (dBZ) | Category |
|---|---|---|---|
| 2 | 2.7 to 13.3 | $\geq 30$ and $< 41$ | Moderate rain |
| 3 | 13.3 to 27.3 | $\geq 41$ and $< 46$ | Heavy rain |
| 4 | 27.3 to 48.6 | $\geq 46$ and $< 50$ | Torrential rain |
| 5 | 48.6 to 133.2 | $\geq 50$ and $< 57$ | Downpour |
| 6 | $\geq 133.2$ | $\geq 57$ | Heavy downpour |

A weather sensing method provided in the embodiments of this application is hereinafter described in detail by using some embodiments and application scenarios thereof with reference to the accompanying drawings.

FIG. 4 is a first schematic flowchart of a weather sensing method according to an embodiment of this application. As shown in FIG. 4, the weather sensing method includes the following steps.

Step 400: In a case that a first condition is met, a first communication device performs weather sensing to obtain sensing and measurement data or a sensing result.

The first condition includes at least one of the following that:

sensing requirement information is received from a second communication device, where the sensing requirement information is used to request the weather sensing; and
a periodic sensing time arrives.

In an implementation, in a case that the first communication device receives the sensing requirement information forwarded by the second communication device, the first communication device performs the weather sensing based on the sensing requirement information to obtain the sensing and measurement data or the sensing result.

The sensing requirement information comes from an application server connected to a first application on a third communication device.

The first application is an application service provided by a third party other than a core network and an air interface. The first application may also be referred to as a third-party application, including an application installed on a smartphone, a PC, other smart devices, or the like.

In a case that the first application requests weather sensing for a target area or a current positioning area, the first application sends a weather sensing request to the application server connected to the first application. After receiving the weather sensing request, the application server generates sensing requirement information and sends the sensing requirement information to the second communication device.

Optionally, the sensing requirement information includes at least one of the following:

sensing area location information, used to indicate a location of a sensing area;
a spatial resolution, used to indicate a spatial granularity of the weather sensing;
a temporal resolution, used to indicate a temporal granularity of the weather sensing; and
sensing repetition configuration information, indicating configuration information for repeating the weather sensing.

The location of the sensing area may be a spatial range of the sensing area, a location range of the sensing area, or the like.

Optionally, the first communication device performs the weather sensing for the sensing area. The sensing area is an area in which the first communication device performs the weather sensing.

The sensing area may be indicated by the sensing area location information in the sensing requirement information. The sensing area may be based on an area designated by the third communication device or positioning information of the third communication device.

Alternatively, the sensing area may be a predetermined target area, for example, an area determined based on a maximum coverage distance range of the first communication device.

Alternatively, the sensing area is an area determined based on the positioning information of the third communication device.

Optionally, the sensing repetition configuration information includes at least one of the following:

no repetition;
repetition within a first time range; and

repetition based on a first cycle until a termination condition is met.

"No repetition" may be understood as one-time sensing.

The configuration information for repeating the weather sensing within the first time range may be a time range or a repetition cycle.

The configuration information for repetition based on the first cycle until the termination condition is met may be a repetition cycle or a repetition termination condition.

In another implementation, the first communication device monitors weather periodically, and when the periodic sensing time arrives, performs the weather sensing to obtain the sensing and measurement data or the sensing result.

Optionally, triggered by a timer, the first communication device periodically monitors weather, where running duration of the timer is related to the periodic sensing time.

Weather sensing performed once by the first communication device is weather sensing performed once by the first communication device within a distance and angle range that the first communication device can cover.

Optionally, that a first communication device performs weather sensing to obtain sensing and measurement data or a sensing result includes:

the first communication device transmits a first signal, and receives an echo signal; and
the first communication device processes the echo signal to obtain the sensing and measurement data or the sensing result.

In this embodiment of this application, the first communication device transmits the first signal, receives the echo signal passing through a meteorological target, and processes the echo signal to obtain the sensing and measurement data or the sensing result, thereby implementing weather detection based on self-transmission and self-reception.

Step 401: The first communication device reports the sensing and measurement data or the sensing result to the second communication device.

The first communication device obtains the sensing and measurement data in a process of performing a weather sensing task, and obtains the sensing result after the weather sensing task is completed.

The first communication device may directly report the sensing result to the second communication device. Alternatively, the first communication device may report the sensing and measurement data to the second communication device, and after the second communication device receives the sensing and measurement data, the second communication device performs the remaining weather sensing task based on the sensing and measurement data to obtain the sensing result.

The second communication device reports the sensing result to the application server connected to the first application.

The application server of the first application performs data fusion processing on sensing results reported by each first communication device to obtain weather of the sensing area, and sends the weather to the first application.

In this embodiment of this application, the first communication device may be a terminal, a base station, or a transmission and reception point TRP; the second communication device may be a core network element or a sensing function network element; and the third communication device may be a terminal.

In this embodiment of this application, the first communication device performs weather sensing based on a user requirement or periodically to obtain the sensing and measurement data or the sensing result, thereby implementing weather detection based on self-transmission and self-reception by the communication device, and meeting the user requirement for knowing about weather in real time.

The weather detection based on self-transmission and self-reception by the communication device is capable of detecting weather in real time based on the user requirement in an integrated communication and sensing state. Therefore, there are broad application prospects for the weather detection based on self-transmission and self-reception by the communication device.

However, for an integrated communication and sensing scenario, a specific technical solution to the weather detection based on self-transmission and self-reception by the communication device and a work procedure thereof are still unclear. In addition, limited by transmit power of the communication device, a working mode similar to that of a weather radar is used in the communication device, and a signal processing algorithm also needs to be adaptively adjusted. Therefore, how to implement the weather detection based on self-transmission and self-reception by the communication device and meet the user requirement for knowing about weather in real time needs to be resolved for the integrated communication and sensing scenario.

Therefore, for weather sensing in which a meteorological target is rainfall, an embodiment of this application provides a specific rainfall sensing algorithm and procedure.

Optionally, the weather sensing includes rainfall sensing, and the rainfall sensing includes at least one of the following: detecting rain or no rain in an area; detecting rain or no-rain distribution; and detecting rainfall rate distribution.

Optionally, that a first communication device performs weather sensing to obtain sensing and measurement data or a sensing result includes:

determining a beam-pointing angle, transmitting the first signal based on the beam-pointing angle, and receiving the echo signal;

preprocessing the echo signal to obtain an echo preprocessing result;

detecting rain or no rain in the area and performing data preprocessing based on the echo preprocessing result and a rainfall decision threshold, and outputting a rainfall decision result and a rain or no-rain distribution detection result; and

in a case that the rainfall decision result is rain, detecting rainfall rate distribution based on a wet aperture attenuation value to obtain the rainfall rate distribution.

It may be understood that the first communication device first determines the beam-pointing angle based on the sensing area, transmits the first signal based on the beam-pointing angle, and receives the echo signal;

then preprocesses the echo signal to obtain the echo preprocessing result;

detects rain or no rain in the area based on the echo preprocessing result and the rainfall decision threshold, and in the case that the rainfall decision result is rain, performs the data preprocessing to obtain the rain or no-rain distribution detection result; and

in the case that the rainfall decision result is rain, detects the rainfall rate distribution based on the rain or no-rain distribution detection result and the wet aperture attenuation value to obtain the rainfall rate distribution.

The rainfall decision threshold and the wet aperture attenuation value are baseline calibration data obtained in advance.

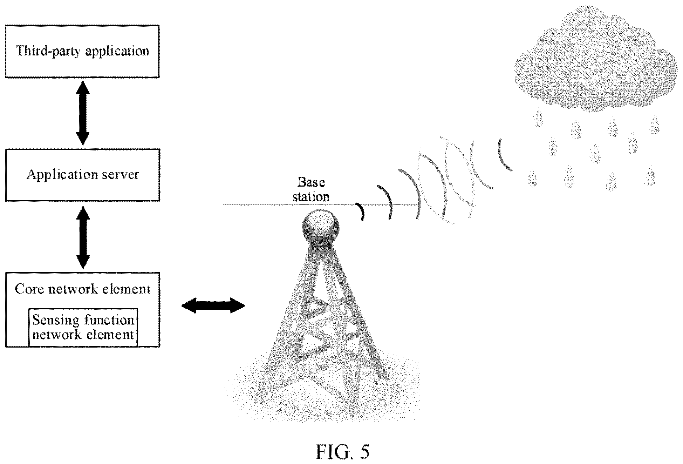

FIG. 5 is a schematic diagram of rainfall detection initiated by a third-party application according to an embodiment of this application. FIG. 5 shows the rainfall detection initiated by the third-party application, including the following steps.

(1) The third-party application requests rainfall sensing.

(2) The application server connected to the third-party application sends sensing requirement information to the core network element or the sensing function network element, where the sensing requirement information is used to request rainfall sensing.

(3) The core network element or the sensing function network element selects, based on the received rainfall sensing requirement information, a first communication device for performing weather sensing, retrieves baseline calibration data obtained in a calibration process, and sends the sensing requirement information and the baseline calibration data to the first communication device; or

the second communication device determines, based on sensing area location information in the sensing requirement information or predetermined target area information, a first communication device for performing rainfall sensing, and sends the sensing requirement information to the first communication device, and the first communication device retrieves baseline calibration data obtained in a calibration process.

The first communication device for performing rainfall sensing may be one or more first communication devices closest to a sensing area, or another appropriate first communication device whose sensing range covers a to-be-sensed area (that is, a sensing area). The second communication device sends the rainfall sensing requirement information to the first communication device for performing rainfall sensing.

(4) The first communication device performs rainfall sensing to obtain sensing and measurement data or a sensing result.

(5) If the first communication device cannot completely cover the sensing area through one beam dwelling, the first communication device adjusts a beam direction, and repeats the operation in step (4) through a next beam dwelling, until the entire sensing area is completely covered.

(6) The first communication device reports the sensing and measurement data or the sensing result to the second communication device.

(7) The second communication device reports the sensing result to the application server connected to the third-party application.

The application server connected to the third-party application performs data fusion processing on sensing results reported by each first communication device to obtain rainfall (rain or no rain, or rainfall rate distribution) in the sensing area, and finally sends the rainfall to the third-party application.

Optionally, the second communication device performs data fusion processing on the sensing results reported by each first communication device to obtain the rainfall in the sensing area, and sends the rainfall in the sensing area to the application server connected to the third-party application, and the application server sends the rainfall in the sensing area to the third-party application.

Optionally, the second communication device obtains the sensing result through calculation based on the sensing and measurement data reported by the first communication device.

Optionally, in a case that the sensing requirement information is received from the second communication device, that a first communication device performs weather sensing to obtain sensing and measurement data or a sensing result includes the following steps.

Step 1a: Obtain baseline calibration data, where the baseline calibration data includes the rainfall decision threshold and the wet aperture attenuation value.

Step 2a: Determine the beam-pointing angle based on the sensing area location information in the sensing requirement information or predetermined target area information in combination with location information of the first communication device.

The target area information is information about the target area mentioned in the foregoing embodiment.

Step 3a: Transmit the first signal based on the beam-pointing angle, and receive the echo signal.

Step 4a: Preprocess the echo signal to obtain the echo preprocessing result.

Step 5a: Detect rain or no rain in the area based on the echo preprocessing result and the rainfall decision threshold, perform the data preprocessing, and output the rainfall decision result and the rain or no-rain distribution detection result.

It should be noted that, first, detecting rain or no rain in the area is performed based on the echo preprocessing result and the rainfall decision threshold to obtain the rainfall decision result; and then the data preprocessing is performed based on the rainfall decision result to obtain the rain or no-rain distribution detection result.

In a case that the rainfall decision result is no rain, the rainfall detection procedure is terminated.

Step 6a: In a case that the rainfall decision result is rain, perform a procedure for detecting rainfall rate distribution based on the wet aperture attenuation value to obtain radial rainfall rate distribution that uses a radar detection distance resolution within the maximum coverage distance range of the first communication device as a resolution cell, and obtain rainfall rate distribution at each position on a horizontal plane through projection based on an included angle between a radiated beam and the horizontal plane.

Step 7a: In a case that the first communication device cannot completely cover the sensing area through one beam dwelling, adjust the beam-pointing angle and perform rainfall sensing through a next beam dwelling, that is, repeat the foregoing step 3a to step 6a, until the sensing area is completely covered, to obtain a rainfall map and a rainfall rate distribution map in the sensing area.

In this embodiment of this application, for the integrated communication and sensing scenario, a specific procedure for performing rainfall sensing is provided. The first communication device performs rainfall sensing based on the user requirement and reports the sensing and measurement data or the sensing result, thereby implementing rainfall detection based on self-transmission and self-reception by the communication device, and meeting the user requirement for knowing about rainfall in real time.

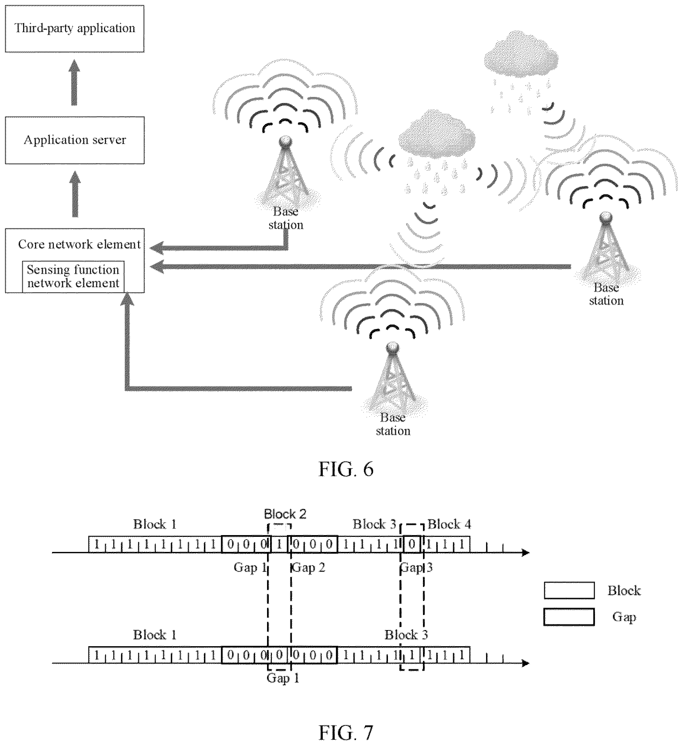

FIG. 6 is a schematic diagram of rainfall monitoring periodically performed by the first communication device according to an embodiment of this application. FIG. 6 shows the rainfall monitoring periodically performed by the first communication device, including the following steps.

(1) Triggered by a timer, the first communication device periodically performs a rainfall sensing action.
(2) The first communication device performs fusion processing on data of rainfall detection results in various beam directions to obtain a rainfall map and a rainfall rate distribution map in a circular area with the first communication device as a center and a maximum coverage distance of the first communication device as a radius.
(3) The first communication device reports the sensing and measurement data or the sensing result to the second communication device.
(4) The second communication device collects rainfall sensing results reported by all first communication devices in a large area (such as a province area or a city area), and performs fusion processing on all data to obtain a rainfall map and a rainfall rate distribution map in the large area.
(5) The second communication device sends the rainfall map and rainfall rate distribution map in the large area to the application server.
(6) The application server pushes rainfall around a location of each third-party application to the third-party application based on locations of all third-party applications connected to the application server.

Optionally, in a case that the periodic sensing time arrives, that a first communication device performs weather sensing to obtain sensing and measurement data or a sensing result includes the following steps.

Step 1b: Obtain baseline calibration data, where the baseline calibration data includes the rainfall decision threshold and the wet aperture attenuation value.

Step 2b: Transmit the first signal based on an azimuth width of a radiated antenna beam, and receive the echo signal.

Step 3b: Preprocess the echo signal to obtain the echo preprocessing result.

Step 4b: Detect rain or no rain in the area based on the echo preprocessing result and the rainfall decision threshold, perform the data preprocessing, and output the rainfall decision result and the rain or no-rain distribution detection result.

Step 5b: In a case that the rainfall decision result is rain, perform a procedure for detecting rainfall rate distribution based on the wet aperture attenuation value to obtain radial rainfall rate distribution that uses a radar detection distance resolution within the maximum coverage distance range of the first communication device as a resolution cell, and obtain rainfall rate distribution at each position on a horizontal plane through projection based on an included angle between a radiated beam and the horizontal plane.

Step 6b: After completing rainfall detection at an angle, terminate dwelling in a current beam direction, shift the beam direction by an angle of one azimuth width and perform rainfall sensing in a next angular sector area, that is, repeat step 2b to step 5b, until an azimuth covers an allowed maximum angle range, and then terminate rainfall sensing in a current cycle.

Step 7b: Perform fusion processing on rainfall sensing results in various beam directions to obtain a rainfall map and a rainfall rate distribution map in a circular area with the first communication device as a center and a maximum coverage distance of the first communication device as a radius.

In this embodiment of this application, for the integrated communication and sensing scenario, a specific procedure for performing rainfall sensing is provided. The first communication device periodically performs rainfall sensing and reports the sensing and measurement data or the sensing result, thereby implementing rainfall detection based on self-transmission and self-reception by the communication device, and meeting the user requirement for knowing about rainfall in real time.

The following describes a calibration process.

(1) Calibrating the rainfall decision threshold

The rainfall decision threshold is obtained by using the following calibration method:

transmitting the first signal and receiving an echo in sunny weather and lightly rainy weather separately to obtain a first data matrix and a second data matrix whose sizes are $N_p \times N_m$ within duration of a sensing signal frame respectively, where $N_m$ values in each row of the first data matrix or in each row of the second data matrix are received echo power values on various distance resolution cells in one sensing signal cycle, $N_p$ values in each column are received echo power values on one distance resolution cell in different sensing signal cycles, $N_p$ is a positive integer greater than 1, and $N_m$ is a positive integer greater than 1;

summing each column of the first data matrix and the second data matrix separately to obtain first total received power and second total received power on various distance resolution cells within the duration of the sensing signal frame;

repeating in $N_b$ sensing signal frames to obtain first average values and second average values of received echo power on various distance resolution cells within first duration, where the first duration includes the $N_b$ sensing signal frames, and $N_b$ is a positive integer greater than or equal to 1;

summing the first average values of the received echo power on various distance resolution cells within the first duration to obtain a third average value of total received echo power within the first duration, and summing the second average values of the received echo power on various distance resolution cells within the first duration to obtain a fourth average value of the total received echo power within the first duration;

obtaining a first decision threshold based on the third average value and the fourth average value of the total received echo power within the first duration, where the first decision threshold is used to decide the total received echo power within the duration of the sensing signal frame to determine whether there is rain or no rain; and

obtaining a second decision threshold based on the first average values and the second average values of the received echo power on various distance resolution cells within the first duration, where the second decision threshold is used to make a decision on the received echo power on various distance resolution cells.

Specifically, considering different seasons in the same area, or as air conditions change, or as meteorological factors other than rainfall (such as dry air, water vapor in the air, or fog and haze) change, signal attenuation caused by the factors also change correspondingly. Therefore, these factors also need to be calibrated. In addition, a rainfall detection/decision threshold also needs to be calibrated.

A method for calibrating the meteorological factors other than rainfall is as follows:

In the sunny weather, the first signal is transmitted and the echo is received, and an $N_p \times N_m$ data matrix within duration of a sensing signal frame is obtained:

$$\mathbf{P}^{d,raw} = \begin{bmatrix} p_{11}^d & p_{12}^d & \cdots & p_{1,N_m}^d \\ p_{21}^d & p_{22}^d & \cdots & p_{2,N_m}^d \\ \vdots & \vdots & \ddots & \vdots \\ p_{N_p,1}^d & p_{N_p,2}^d & \cdots & p_{N_p,N_m}^d \end{bmatrix}$$

$N_m$ values in each row of the matrix are received echo power values on various distance resolution cells in one sensing signal cycle, and $N_p$ values in each column are received echo power values on one distance resolution cell in different sensing signal cycles.

Each column of the data matrix is summated. $p_{11}^d$, $p_{21}^d$, $\ldots$, $p_{N_p,1}^d$ add up to $p_1^d$. $p_{1,N_m}^d$, $p_{2,N_m}^d$, $\ldots$, $p_{N_p,N_m}^d$ add up to $p_{N_m}^d$. Finally, one $1 \times N_m$ vector is obtained. The vector is total received power on various distance resolution cells within the duration of the sensing signal frame:

$$\mathbf{P}^d = \begin{bmatrix} p_1^d & p_2^d & \cdots & p_{N_m}^d \end{bmatrix}$$

where

$$p_i^d = \sum_{j=1}^{N_p} p_{ji}^d .$$

The foregoing is repeated in $N_b$ sensing signal frames to obtain average values of received echo power on various distance cells within the first duration:

$$\overline{\mathbf{P}}^d = \begin{bmatrix} \overline{p}_1^d & \overline{p}_2^d & \cdots & \overline{p}_{N_m}^d \end{bmatrix}$$

where $\overline{p}_i^d$ is a first average value of received echo power on an ith distance resolution cell within the first duration.

Further, an average value $\overline{P}^d = \sum_{i=1}^{N_m} \overline{p}_i^d$, that is, a third average value, of total received echo power within the first duration in the sunny weather is obtained.

A value of $N_b$ may be configured by the sensing function network element, or may be dynamically set by the first communication device or the sensing function network element based on a measurement data processing result in the calibration process.

In the lightly rainy weather, the foregoing operations are repeated to obtain average values of received echo power on various distance cells within duration of a sensing signal frame:

$$\overline{\mathbf{P}}^w = \begin{bmatrix} \overline{p}_1^w & \overline{p}_2^w & \cdots & \overline{p}_{N_m}^w \end{bmatrix}$$

where $\overline{p}_i^w$ is a second average value of received echo power on the ith distance resolution cell within the first duration.

Further, an average value $\overline{P}^w = \sum_{i=1}^{N_m} \overline{p}_i^w$, that is, a fourth average value, of total received echo power within the duration of the sensing signal frame in the lightly rainy weather is obtained.

Further, the first decision threshold is obtained based on the third average value and the fourth average value of the total received echo power within the first duration, where the first decision threshold is used to decide the total received echo power within the duration of the sensing signal frame to determine whether there is rain or no rain,

where $\tau_{total}$ is the first decision threshold obtained based on the average values (the third average value and the fourth average value) of the total received echo power within the duration $T_{tot}$ (that is, the first duration) in the calibration process and is expressed as follows:

$$\tau_{total} = C_1 \cdot \frac{\overline{P}^w - \overline{P}^d}{\overline{P}^d}$$

where $C_1$ is a positive real number less than 1 and is determined based on the calibration data.

Further, the second decision threshold is obtained based on the first average values and the second average values of the received echo power on various distance resolution cells within the first duration, where the second decision threshold is used to make a decision on the received echo power on various distance resolution cells,

where $\tau_i$ is the second decision threshold obtained based on the average values (the first average value and the second average value) of the received echo power on the i$^{th}$ distance resolution cell within the duration $T_{tot}$ (that is, the first duration) in the calibration process and is expressed as follows:

$$\tau_i = C_2 \cdot \frac{\overline{p}_i^w - \overline{p}_i^d}{\overline{p}_i^w}$$

where $C2$ is a positive real number less than 1 and is determined based on the calibration data.

(2) Calibrating wet aperture attenuation

Wet aperture attenuation refers to attenuation of radiated and received electromagnetic waves, caused by rainwater attached to a surface of a transmit/receive antenna after rainfall occurs. It is a source of attenuation that cannot be ignored.

In a process of detecting rainfall rate distribution, the wet aperture attenuation value needs to be used alone. The wet aperture attenuation $L_w$ may be obtained based on a difference between received echo power of a reference target in a wet aperture state after rain and that in a dry aperture state on a sunny day. Note: In this case, the wet aperture attenuation obtained through calibration is already two-way attenuation.

Optionally, the first signal includes one of the following:

a communication-dominant signal;
a sensing-dominant signal;
a sensing-enhanced communication-dominant signal; and
an integrated communication and sensing signal.

A waveform of the first signal is a continuous wave waveform or a pulse waveform.

The first signal uses a wideband signal waveform and may be:

(a) a communication-dominant signal, for example, an NR signal, an LTE signal, or a Wi-Fi signal;
(b) a sensing-dominant signal, for example, a radar signal, including a frequency modulated continuous wave (Frequency Modulated Continuous Wave, FMCW) radar signal, an OFDM radar signal (including a phase-encoded OFDM radar signal), a radar linear frequency modulation (Linear frequency modulation, LFM) signal, a simple pulse train signal, a phase-encoded radar signal, or the like;
(c) a sensing-enhanced communication-dominant signal, which is a signal obtained by designing the communication-dominant signal in time-frequency domain to increase a sensing capability of the signal; and
(d) an integrated communication and sensing signal, which refers to a new signal waveform specially designed for the integrated communication and sensing scenario, and may include a signal waveform designed for reference signal applicability based on an NR signal, a multi-symbol OFDM pulse signal waveform, or the like.

The first signal may be a continuous wave waveform or a pulse waveform.

Optionally, the preprocessing the echo signal to obtain an echo preprocessing result includes:

in each sensing signal cycle, performing matched filtering processing on the echo signal received by the first communication device;

dividing a maximum detection distance of the first communication device into $N_m$ distance resolution cells, obtaining received echo power of the echo signal on each distance resolution cell in each sensing signal cycle, and generating a received echo data matrix;

summating each column of the received echo data matrix to obtain a $1 \times N_m$ vector, where the vector represents total received power on various distance resolution cells within duration of a sensing signal frame; and

summating the total received power on various distance resolution cells within the duration of the sensing signal frame to obtain total received echo power on the $N_m$ distance resolution cells within the duration of the sensing signal frame, where

the sensing signal frame includes $N_p$ sensing signal cycles, and the sensing signal cycle is a cycle for transmitting the first signal once and performing echo signal processing; and

the received echo data matrix is an $N_p \times N_m$ matrix, $N_p$ is a positive integer greater than 1, and $N_m$ is a positive integer greater than 1.

In this embodiment of this application, the first communication device performs a sensing process periodically at specific time intervals (for example, 15 minutes), or performs a sensing process under control of signaling from the third-party application, the core network, the sensing function network element, or the like within duration of a sensing signal frame, where the duration of the sensing signal frame includes $N_p$ sensing signal cycles.

In each sensing signal cycle, matched filtering processing is performed on the echo signal received by the first communication device.

The maximum detection distance of the first communication device is divided into $N_m$ distance resolution cells, received echo power of the echo signal on each distance resolution cell in each sensing signal cycle is obtained, and a received echo data matrix is obtained,

$$\mathbf{P}^{raw} = \begin{bmatrix} p_{11} & p_{12} & \cdots & p_{1,N_m} \\ p_{21} & p_{22} & \cdots & p_{2,N_m} \\ \vdots & \vdots & \ddots & \vdots \\ p_{N_p,1} & p_{N_p,2} & \cdots & p_{N_p,N_m} \end{bmatrix}$$

where $N_m$ values in each row of the matrix are received echo power values on various distance resolution cells in one sensing signal cycle, and $N_p$ values in each column are received echo power values on one distance resolution cell in different sensing signal cycles.

The maximum detection distance of the first communication device is a maximum coverage distance of the first communication device.

Each column of the received echo data matrix $\mathbf{P}^{raw}$ is summated, and a $1 \times N_m$ vector is obtained, where the vector is a sum of received power (also referred to as total received power) on various distance resolution cells within duration of a sensing signal frame:

$$\mathbf{P} = \begin{bmatrix} p_1 & p_2 & \cdots & p_{N_m} \end{bmatrix}$$

where

$$p_i = \sum_{j=1}^{N_p} p_{ji}.$$

The total received echo power on the $N_m$ distance resolution cells within the duration of the sensing signal

$$P_{total} = \sum_{k=1}^{N_m} p_k$$

frame is denoted as .

The following describes a rainfall detection method.

Optionally, the detecting rain or no rain in the area based on the echo preprocessing result and the rainfall decision threshold, performing the data preprocessing, and outputting the rainfall decision result and the rain or no-rain distribution detection result includes:

deciding, based on the first decision threshold, total received echo power of $N_m$ distance resolution cells within the duration of the sensing signal frame to determine whether there is rain or no rain, to obtain a first decision result;

in a case that the first decision result is rain, making a decision on received echo power on each distance resolution cell within the duration of the sensing signal frame based on the second decision threshold, to obtain a decision result on the received echo power on each distance resolution cell;

collecting statistics of decision results on the received echo power on various distance resolution cells, analyzing a quantity of threshold-crossing distance resolution cells based on a statistical result, and outputting the rainfall decision result; and

in a case that a ratio of the quantity of the threshold-crossing distance resolution cells to a total quantity of distance resolution cells exceeds a first threshold, performing a feature analysis on the threshold-crossing distance resolution cells, performing data preprocessing on a result of the feature analysis of the threshold-crossing distance resolution cells, and outputting the rain or no-rain distribution detection result.

It may be understood that the rainfall detection method provided in this embodiment of this application includes the following steps.

Step 1: Make a decision on the total received echo power.

The following decision is made on the total received echo power within the duration of the sensing signal frame.

If $\dfrac{P_{total} - \overline{P}^d}{\overline{P}^d} \le \tau_{total}$ , it is preliminarily determined that there is no rain, and the current rainfall detection is terminated.

If $\dfrac{P_{total} - \overline{P}^d}{\overline{P}^d} > \tau_{total}$ , it is preliminarily determined that there is rain, and subsequent detection is performed.

$\tau_{total}$ is the first decision threshold obtained in the calibration process. A method for calculating $\tau_{total}$ has been described above. Details are not described herein again.

Step 2: Make a decision on the received echo power on each distance resolution cell.

A decision is made on the received power on each distance resolution cell. For the $i^{th}$ distance cell,

if $\dfrac{p_i - \overline{p}_i^d}{\overline{p}_i^d} \le \tau_i$ , a detection flag of the current distance resolution cell is denoted as $D_i = 0$ ; or

if $\dfrac{p_i - \overline{p}_i^d}{\overline{p}_i^d} > \tau_i$ , a detection flag of the current distance resolution cell is denoted as $D_i = 1$.

$\tau_i$ is the second decision threshold obtained in the calibration process. A method for calculating $\tau_i$ has been described above. Details are not described herein again.

Step 3: Collect statistics of threshold-crossing distance resolution cells.

The statistics of decision results on the received power on various distance resolution cells in step 2 are collected, and detection flags of all the distance resolution cells are summated: $D_{total} = \sum_i^{N_m} D_i$ .

Then the quantity of the threshold-crossing distance resolution cells is analyzed.

$$\frac{D_{total}}{N_m} > C_3$$

If , it is considered that a rainfall event has occurred indeed, and rainfall rate distribution is detected subsequently.

$$\frac{D_{total}}{N_m} \leq C_3$$

If , it is considered that no rainfall event has occurred, and the rainfall detection process is terminated. In this case, received power on a few distance resolution cells exceeds the threshold and detection flags thereof are 1. There are two possible reasons: 1. some received power values are outliers due to impact of noise. 2 There are echoes reflected by other objects on a beam transmission path.

In the foregoing decision, $C_3$ is a positive real number far less than 1 and may be set based on an empirical value in debugging. For example, round($C_3 N_m$)=5 may be set, where round() means rounding.

After this step is completed, a decision result on whether there is rain on a detection path is output. In a case that the decision result is rain, subsequent processing is performed.

Step 4: Perform a feature analysis on the threshold-crossing distance resolution cells, and perform data preprocessing.

After the ratio of the quantity $D_{total}$ of the distance resolution cells crossing the detection threshold to the total quantity $N_m$ of distance resolution cells exceeds $C_3$, a feature analysis is performed on the threshold-crossing distance resolution cells.

Optionally, the performing a feature analysis on the threshold-crossing distance resolution cells, performing data preprocessing on a result of the feature analysis of the threshold-crossing distance resolution cells, and outputting the rain or no-rain distribution detection result in a case that a ratio of the quantity of the threshold-crossing distance resolution cells to a total quantity of distance resolution cells exceeds a first threshold includes:

collecting statistics of blocks (Block) and gaps (Gap) of all the distance resolution cells starting from a first threshold-crossing distance resolution cell, where the block is used to represent rain, and the gap is used to represent no rain, and obtaining $N_B$ blocks and $N_G$ gaps, each of which includes a quantity of distance resolution cells, where $N_B$ is a positive integer greater than or equal to 1, and $N_G$ is a positive integer greater than or equal to 1;

for an i-th block, in a case that the i-th block includes one distance resolution cell and that quantities of distance resolution cells included in two gaps adjacent to the i-th block meet a first preset condition, changing a decision result on the distance resolution cell included in the i-th block to "non-threshold-crossing", combining the i-th block and the two gaps adjacent to the i-th block into a new gap, and changing a received echo power value on the distance resolution cell included in the i-th block to an average value of received echo power on all the distance resolution cells in the two gaps adjacent to the i-th block;

for an i-th gap, in a case that the i-th gap includes one distance resolution cell and that quantities of distance resolution cells included in two blocks adjacent to the i-th gap meet the first preset condition, changing a decision result on the distance resolution cell included in the i-th gap to "threshold-crossing", combining the i-th gap and the two blocks adjacent to the i-th gap into a new block, and changing a received echo power value on the distance resolution cell included in the i-th gap to an average value of received echo power on all the distance resolution cells in the two blocks adjacent to the i-th gap; and

outputting a block set and a gap set, where

i is a natural number greater than or equal to 1;

in a case that the i-th block is a first block, only a first gap subsequent to the i-th block is considered; or in a case that the i-th" block is a last block, only a gap previous to the i-th block is considered; and

in a case that the i-th gap is a first gap, only a first block subsequent to the i-th gap is considered; or in a case that the i-th gap is a last gap, only a block previous to the i-th gap is considered.

The following provides a detailed description with reference to FIG. 7. FIG. 7 is a schematic diagram of data preprocessing performed on a result of a feature analysis of threshold-crossing distance resolution cells according to an embodiment of this application.

Starting from the first distance resolution cell crossing the detection threshold (assumed to be an m-th distance resolution cell), statistics of blocks (Block) and gaps (Gap) of data are collected, as shown in FIG. 7.

The m-th distance resolution cell is grouped into the first block (denoted as $B_1 = \{m\}$).

Then an (m+1)-th distance resolution cell is checked. If $D_{m+1} = 1$ (as described above, indicating crossing of the detection threshold), the (m+1)-th distance resolution cell is grouped into the first block (denoted as $B_1 = \{m, m+1\}$).

An (m+2)-th distance resolution cell continues to be checked, until $D_n = 0$ at an n-th distance resolution cell (as described above, indicating crossing of the detection threshold). The first block is terminated and denoted as ($B_1$={$m,m+1,\cdots,n$-1}). In this case, the first gap appears and is denoted as $G_1$={$n$}.

An ($n$+1)-th distance resolution cell continues to be checked. If $D_{n+1}$ = 0, the ($n$+1)-th distance resolution cell is grouped into the first gap denoted as $G_1$={$n,n$+1}.

An ($n$+2)-th distance resolution cell continues to be checked, until $D_q$ = 1 at a $q$-th distance resolution cell. The first gap is terminated and denoted as $G_1$={$n,n$+1,$\cdots q$-1}. In this case, a second gap appears and is denoted as $B_2$={$q$}.

By analogy, all the distance resolution cells from the first threshold-crossing distance resolution cell to the last threshold-crossing distance resolution cell are eventually grouped into $N_B$ blocks and $N_G$ gaps, each of which includes a quantity of distance resolution cells.

Further, based on the division of blocks and gaps, the following processing is performed:

For the i-th block ($B_i$), if the quantity of distance cells included in the i-th block is 1 (denoted as $l(B_i)$=1), and the quantities of distance cells included in the two gaps (assumed to be $G_m$ and $G_{m+1}$) adjacent to the i-th block meet $l(G_m) \geq 2$ and $l(G_{m+1}) \geq 2$, the decision result on the distance resolution cell included in $B_i$ is changed to "non-threshold-crossing"; then $B_i$ is canceled, and $G_m$, $B_i$, and $G_{m+1}$ are combined into a new gap; and the received power on the distance resolution cell previously included in $B_i$ is changed to an average value of all elements in $G_m$ and $G_{m+1}$ for subsequent signal processing. If $B_i$ is the first block, only the gap subsequent to $B_i$ needs to be considered. If $B_i$ is the last block, only the gap previous to $B_i$ needs to be considered.

For the i-th gap ($G_i$), if the quantity of distance cells included in the i-th gap is 1 (denoted as $l(G_i)$=1), and the quantities of distance cells included in the two blocks (assumed to be $B_m$ and $B_{m+1}$) adjacent to the i-th gap meet $l(B_m) \geq 2$ and $l(B_{m+1}) \geq 2$, the decision result on the distance resolution cell included in $G_i$ is changed to "threshold-crossing"; then $G_i$ is canceled, and $B_m$, $G_i$, and $B_{m+1}$ are combined into a new block; and the received power on the distance resolution cell previously included in $G_i$ is changed to an average value of all elements in $B_m$ and $B_{m+1}$ for subsequent signal processing.

A purpose and benefit of the foregoing processing is as follows: Because a reflected echo of a transmit beam in rainfall is very weak, received power on each distance resolution cell frequently appears to be an outlier: a separate threshold-crossing distance resolution cell or a separate non-threshold-crossing distance resolution cell. The foregoing processing can eliminate some outliers and help improve accuracy of subsequent signal processing.

After this step is completed, a result of rain or no-rain distribution on the detection path is output: For resolution cells in the set $B_{total}$ = {$B_1, B_2,\cdots, B_{N_B}$}, there is rain; and for those in the set $G_{total}$ = {$G_1, G_2,\cdots, G_{N_G}$}, there is no rain.

After rainfall is determined in the foregoing steps, rainfall rate distribution detection described in detail below is performed based on the received power values obtained after the feature analysis of the threshold-crossing distance resolution cells and the data preprocessing.

A distance resolution cell in the set $B_{total}$ of distance resolution cells in all processed blocks is processed as rainfall, and a rainfall rate $\rho_i$, $i \in B_{total}$ thereof is calculated. A distance resolution cell in the set $G_{total}$ of distance resolution cells in all processed gaps is processed as no rainfall, and $\rho_i$ =0, $i \in G_{total}$.

When a rain or no-rain detection result is rain, and after the foregoing feature analysis and data preprocessing based on the threshold-crossing distance resolution cells, the process of detecting rainfall rate distribution is performed. An objective of detecting rainfall rate distribution is to calculate rainfall rates $\rho_i$, $i \in B_{total}$ of all the threshold-crossing distance resolution cells, and the calculation is performed based on received echo power data obtained after the feature data analysis of the threshold-crossing distance resolution cells and the data preprocessing.

Based on the foregoing rain or no-rain distribution detection result, if a result of the first distance resolution cell (a distance resolution cell closest to the communication device) among all the $N_m$ distance resolution cells is rain, that is, if $D_1$ = 1, the wet aperture attenuation (already measured in the calibration process) needs to be considered in the following calculation; or if $D_1$ = 0, the wet aperture attenuation does not need to be considered. In the following description, all radar equations include $L_w$. When $D_1$ = 1, $L_w$ is 1; or when $D_1$ = 0, $L_w$ is the wet aperture attenuation value measured in advance.

Manner 1: approximation algorithm: ignoring halfway rain attenuation

Optionally, the performing a procedure for detecting rainfall rate distribution based on the wet aperture attenuation value in a case that the rainfall decision result is rain includes:

calculating a volume scattering rate of each threshold-crossing distance resolution cell based on received echo power data obtained after the feature analysis of the threshold-crossing distance resolution cells and the data preprocessing, and the wet aperture attenuation value;

obtaining a scattering rate factor of each threshold-crossing distance resolution cell based on a Rayleigh scattering model and the volume scattering rate of each threshold-crossing distance resolution cell;

obtaining a rainfall rate of each threshold-crossing distance resolution cell based on the scattering rate factor of each threshold-crossing distance resolution cell and a relationship between the scattering rate factor and the rainfall rate; and

obtaining rainfall rate distribution in the current beam direction in a case of rain with reference to the rainfall rate of each threshold-crossing distance resolution cell.

For rainfall of the $i^{th}$ ($i \in B_{total}$) distance resolution cell $\Delta V = \Delta R \theta_3 \phi_3$, reflected echo power of a single pulse caused by the rainfall distance resolution cell is:

$$p_i^r = \frac{p_i - p_i^d}{N_p} .$$

In addition, a center distance $R_i$ of the distance resolution cell is:

$$R_i = i \cdot \frac{\Delta R}{2}, \quad i = 1, 2, \cdots, N_m .$$

According to the foregoing volume scattering radar equation, considering the wet aperture attenuation (two-way, measured in the system calibration process, and denoted as $L_w$), the volume scattering rate of the $i^{th}$ distance resolution cell may be obtained:

$$\eta_i = \frac{(4\pi)^3 (R_i)^2 L_s L_w L_a (R_i)}{0.57 \, p_i^r P_t G^2 \lambda^2 \Delta R \theta_3 \phi_3} .$$

Further, based on the Rayleigh scattering model, the scattering rate factor of the $i^{th}$ distance resolution cell may be obtained:

$$Z_i = \frac{\lambda^4}{\pi^5 |K|^2} \cdot \frac{(4\pi)^3 (R_i)^2 L_s L_w L_a (R_i)}{0.57 p_i^r P_t G^2 \lambda^2 \Delta R \theta_3 \phi_3} .$$

Similarly, scattering rate factors of all other distance resolution cells ($i \in B_{total}$) are obtained:

$$\mathbf{Z} = \{Z_i\}, i \in B_{total} .$$

Based on a power relationship between a scattering rate factor and a rainfall rate $\rho$ in an FR1 frequency band:

$$Z = 200 \rho^{1.6} ,$$

rainfall rates of all the distance resolution cells ($i \in B_{total}$) are obtained:

$$\boldsymbol{\rho} = \{\rho_i\}, i \in B_{total}$$
$$= \left\{ \left( \frac{Z_i}{200} \right)^{\frac{1}{1.6}} \right\}, i \in B_{total} .$$

With reference to the rainfall rates $\rho_i$ =0, $i \in G_{total}$ of all the distance resolution cells ($i \in G_{total}$ ), rainfall rates of the $N_m$ resolution cells within a distance range of $0$ to $cT/2$ in the current beam direction are finally obtained.

By performing 360° direction scanning and performing the foregoing processing, rainfall rate distribution around the current communication device can be obtained.

Manner 2: modification algorithm: considering halfway rain attenuation

In the approximation algorithm, impact of halfway rainfall on considered rain attenuation of the distance resolution cell is not considered. According to *Radar Meteorology* by Zhang Peichang, etc. and *Doppler Weather Radar Principles and Applications* by Yu Xiaoding, etc., considerations of conventional meteorological radars (or weather radars) for halfway rainfall attenuation are mainly categorized into two categories. In the first category, considering that rain attenuation has little impact on a centimeter wavelength and longer wavelengths, the impact may not be considered. In this case, there may be a maximum error of 10 dB within a farthest effective range of a conventional meteorological radar in a heavy rain scenario. In the second category, impact of rain attenuation is considered, and the consideration is to assume that a halfway rainfall rate is the same as a rainfall rate at a measured distance, directly substitute the rain attenuation when solving a radar equation, and finally obtain the rainfall rate.

It should be realized that the considerations of the conventional meteorological radars for halfway rain attenuation ignore regional changes in rainfall, and in particular, rainfall rate measurement errors in changing areas and edge areas with rainfall.

According to the ITU-R Recommendation P.838-3 *Specific Attenuation Model for Rain for Use in Prediction Methods*, the following power relationship exists between attenuation A (dB/km) of electromagnetic waves caused by rainfall and rainfall intensity $\rho$ (mm/h):

$$A = k \rho^{a}.$$

In the FR1 frequency band (sub-6 GHz), considering a scenario in which a carrier frequency is 6 GHz, $k \approx 7 \times 10^{-4}$, and $a \approx 1.58$. In a scenario of third-level heavy rain in 6-level rainfall intensity classification (refer to the foregoing Table 2) (considering the rainfall rate $\rho$ = 20 mm/h), two-way rain attenuation at 5 km is approximately 0.8 dB. In heavier rainfall or in a higher frequency band, rain attenuation is even greater. Not considering rain attenuation will underestimate a rainfall rate at a distance.

This embodiment of this application provides an iterative rain attenuation processing algorithm for radar signal processing based on a wideband distance resolution.

Optionally, the performing a procedure for detecting rainfall rate distribution based on the wet aperture attenuation value in a case that the rainfall decision result is rain includes:

obtaining halfway rain attenuation of the echo signal on an i-th threshold-crossing distance resolution cell based on a rainfall rate of the first threshold-crossing distance resolution cell to a rainfall rate of an (i-1)-th threshold-crossing distance resolution cell, and a relationship between the rain attenuation and the rainfall rate, where i is a positive integer greater than 1;

calculating a volume scattering rate of the i-th threshold-crossing distance resolution cell based on the halfway rain attenuation of the echo signal on the i-th threshold-crossing distance resolution cell, received echo power data on the i-th threshold-crossing distance resolution cell, and the wet aperture attenuation value;

obtaining a scattering rate factor of the i-th threshold-crossing distance resolution cell based on a Rayleigh scattering model and the volume scattering rate of the i-th threshold-crossing distance resolution cell;

obtaining a rainfall rate of the i-th threshold-crossing distance resolution cell based on the scattering rate factor of the i-th threshold-crossing distance resolution cell and a relationship between the scattering rate factor and the rainfall rate;

adding 1 to i and calculating a rainfall rate of a next threshold-crossing distance resolution cell until rainfall rates of all the threshold-crossing distance resolution cells are obtained; and

obtaining rainfall rate distribution in the current beam direction in a case of rain with reference to the rainfall rates of all the threshold-crossing distance resolution cell, where

the rainfall rate of the first threshold-crossing distance resolution cell is obtained through calculation without considering halfway rain attenuation.

Considering that a first distance resolution cell $i \in B_{total}$ (received echo power exceeds the threshold) is the $i^{th}$ distance resolution cell among all the $N_m$ distance resolution cells, a distance from the center of this distance resolution cell to the communication device is:

$$R_i = \frac{\Delta R}{2} + (i-1) \cdot \Delta R$$

Because there is no rainfall before this distance resolution cell, impact of its own rain attenuation is ignored. By applying the radar equation based on the volume scattering model and considering the wet aperture attenuation $L_w$, the volume scattering rate can be obtained:

$$\eta_i = \frac{(4\pi)^3 (R_i)^2 L_s L_w L_a (R_i)}{0.57 p_i^r P_t G^2 \lambda^2 \Delta R \theta_3 \phi_3}$$

Based on the Rayleigh scattering model, the scattering rate factor is obtained:

$$Z_i = \frac{\lambda^4}{\pi^5 |K|^2} \cdot \frac{(4\pi)^3 (R_i)^2 L_s L_w L_a (R_i)}{0.57 p_i^r P_t G^2 \lambda^2 \Delta R \theta_3 \phi_3}$$

Further, based on the power relationship between the scattering rate factor and the rainfall rate, the rainfall rate on the distance cell is obtained:

$$\rho_i = \left\{ \left( \frac{Z_i}{200} \right)^{\frac{1}{1.6}} \right\}$$

After a rainfall rate $\rho_i$ of the $i^{th}$ distance resolution cell is obtained, rain attenuation from the communication device to a second resolution cell in the set $B_{total}$ (received echo power exceeds the threshold) may be calculated based on a power rule between the rain attenuation and the rainfall rate, and this distance resolution cell is denoted as a $j^{th}$ distance resolution cell among all the $N_m$ distance resolution cells.

A distance from the communication device to the $j^{th}$ distance resolution cell is:

$$R_j = \frac{\Delta R}{2} + (j-1) \cdot \Delta R$$

The rain attenuation from the communication device to the $j^{th}$ distance resolution cell is:

$$L_{r,j} (\text{dB}) = 2\Delta R \cdot k (\rho_i)^a$$

$L_{r,j}$(dB) represents two-way rain attenuation experienced by a scatterer of a distance resolution cell at a distance $R_j$ from the communication device, in dB. The rain attenuation in the foregoing formula is a rain attenuation value in linear units as follows:

$$L_{r,j} = 10^{\frac{L_{r,j}(\text{dB})}{10}} = 10^{\left[ 2\Delta R \cdot k (\rho_i)^a \right]/10}$$

When a volume scattering rate of the $j^{th}$ distance resolution cell is calculated, the rain attenuation value is substituted into the following formula:

$$\eta_j = \frac{(4\pi)^3 (R_j)^2 L_s L_w L_a (R_j) L_{r,j}}{0.57 p_j^r P_t G^2 \lambda^2 \Delta R \theta_3 \phi_3}.$$

Subsequent processing is the same as the processing of the $i^{th}$ resolution cell, and a rainfall rate $\rho_j$ of the $j^{th}$ resolution cell is obtained.

Similarly, two-way rain attenuation experienced by a third resolution cell (this distance resolution cell is the $m^{th}$ distance resolution cell among all the $N_m$ distance resolution cells) in the set $B_{total}$ (received echo power exceeds the threshold) is:

$$L_{r,m}(\mathrm{dB}) = 2\Delta R \cdot k (\rho_i)^a + 2\Delta R \cdot k (\rho_j)^a.$$

Likewise, this rain attenuation is converted into linear units and then substituted into the radar equation to calculate a volume scattering rate of the distance resolution cell. Then a scattering rate factor of the distance resolution cell is obtained, and then a rainfall rate of the distance resolution cell is obtained.

By analogy, when a volume scattering rate $\eta_n$ of an $n^{th}$ distance resolution cell is calculated, a two-way rain attenuation value caused by all distance resolution cells whose distance resolution cell numbers are less than $n$ in the set $B_{total}$ (received echo power exceeds the threshold) is substituted:

$$L_{r,n}(\mathrm{dB}) = 2\Delta R \sum_{\substack{q<n \\ q \in B_{total}}} k (\rho_q)^a.$$

The foregoing iterative algorithm is summarized as follows:

Impact of the rain attenuation on the echo of the first resolution cell in the set $B_{total}$ is not considered for calculating the rainfall rate of the first resolution cell.

The rain attenuation and rainfall rate of the first resolution cell in the set $B_{total}$ are considered for obtaining the rainfall rate of the second resolution cell in the set $B_{total}$ through calculation.

The rain attenuation and rainfall rates of the first resolution cell and the second resolution cell in the set $B_{total}$ are considered for obtaining the rainfall rate of the third resolution cell in the set $B_{total}$ through calculation.

The rain attenuation and rainfall rates of the first resolution cell, the second resolution cell, and the third resolution cell in the set $B_{total}$ are considered for obtaining a rainfall rate of a fourth resolution cell in the set $B_{total}$ through calculation.

By analogy, the rainfall rates of all the resolution cells are finally obtained.

The echo signal processing algorithm based on the wideband radar distance resolution according to this embodiment of this application obtains the rainfall rate and rainfall rate distribution on the detection path based on the received echo power on each distance resolution cell and a scattering rate factor model of Rayleigh scattering. The algorithm has the following beneficial effects:

    (1) A joint rain or no-rain decision based on the total received echo power and the received echo power on each distance resolution cell is proposed, to accurately detect whether it rains.
    (2) A detected signal-to-noise ratio is increased based on coherent superposition of echoes in a plurality of sensing signal cycles within the sensing signal frame, and it is proposed that data preprocessing should be performed on the received echo power on each distance resolution cell based on the feature analysis of the threshold-crossing distance resolution cells, to improve accuracy of rainfall rate distribution detection.
    (3) Considering impact of halfway rain attenuation on rainfall rate measurement, an iterative rain attenuation processing algorithm is proposed, and is especially suitable for scenarios with high carrier frequencies, long paths, or high rainfall intensity. The algorithm improves performance of rainfall rate detection.

Optionally, the sensing and measurement data includes at least one of the following:

    a received echo data matrix;
    total received power on various distance resolution cells within duration of a sensing signal frame;
    total received echo power on $N_m$ distance resolution cells within the duration of the sensing signal frame, where $N_m$ is a positive integer greater than 1;
    a result of a feature analysis of threshold-crossing distance resolution cells; and

received echo power data obtained after the feature analysis of the threshold-crossing distance resolution cells and data preprocessing.

It may be understood that the sensing and measurement data includes the result obtained in each step of the foregoing rainfall sensing.

Optionally, the sensing result includes at least one of the following:

a rainfall decision result corresponding to each radiated beam direction;
a rain or no-rain distribution detection result corresponding to each radiated beam direction; and
rainfall rate distribution corresponding to each radiated beam direction in a case of rain.

Optionally, in a case that the first communication device reports the sensing and measurement data, the first communication device further reports sensing assistance information, where the sensing assistance information includes:

location information of the first communication device;
sensing signal waveform configuration information;
a time for performing rainfall sensing; and
a radiated beam direction of the first communication device.

Optionally, the method further includes:
the first communication device obtains reference information about rainfall, where the reference information is used to determine a rainfall sensing error of the first communication device.

The reference information may be obtained periodically or obtained based on triggering.

Optionally, that the first communication device obtains reference information about rainfall includes:

sending a first request message to the second communication device, where the first request message is used to request to obtain rainfall measurement data of a third-party station; and receiving the rainfall measurement data returned by the second communication device, and using the rainfall measurement data as the reference information; or
obtaining rainfall measurement data by using a rainfall measurement device configured for the first communication device, and using the rainfall measurement data as the reference information.

In other words, the method for obtaining the reference information may be as follows:

(1) The first communication device is equipped with a special rainfall measurement device for rainfall to directly perform measurement to obtain reference information about rainfall. The special rainfall measurement device includes but is not limited to a rain gauge.
(2) The sensing function network element may request the reference information from a third-party station. The reference information is sent from an AF to a NEF and then to the sensing function network element.

The third-party station includes a meteorological station, a meteorological radar station, another station having a communication function and equipped with a special rainfall measurement device, or the like.

Optionally, the reference information may be requested based on geographical location information.

Optionally, the sensing function network element schedules the first communication device to perform the rainfall sensing process described in the foregoing embodiment, and the sensing target area covers an area corresponding to the reference information.

The first communication device reports the rainfall sensing result to the sensing function network element. The sensing function network element obtains the rainfall sensing error of the first communication device with reference to the rainfall sensing result reported by the first communication device and the reference information.

The sensing function network element sends rainfall sensing error information to other sensing nodes within an area around the first communication device. The rainfall sensing error information is used by the other sensing nodes to correct their own rainfall sensing errors, thereby improving accuracy of rainfall sensing.

In this embodiment of this application, radar signal processing is performed by using self-transmission and self-reception by a mobile communication device, and rainfall detection and rainfall rate distribution detection are implemented with reference to a rain attenuation model, featuring a high temporal resolution and a high spatial resolution. In addition, this embodiment of this application proposes a feature analysis on threshold-crossing distance resolution cells for rainfall rate detection, data preprocessing on received echo power on each distance resolution cell, and an iterative rain attenuation processing algorithm, to improve performance of rainfall rate detection.

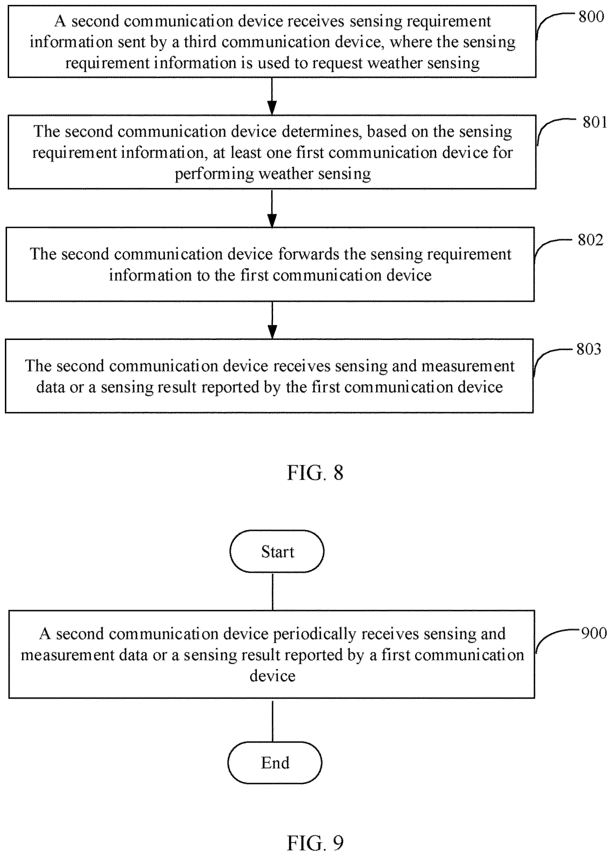

FIG. 8 is a second schematic flowchart of a weather sensing method according to an embodiment of this application. As shown in FIG. 8, the method includes the following steps.

Step 800: A second communication device receives sensing requirement information sent by a third communication device, where the sensing requirement information is used to request weather sensing.

It should be noted that, in a case that a first application on the third communication device requests weather sensing or requests weather sensing for an area or a current positioning area, the first application sends a weather sensing request to an application server connected to the first application. After receiving the weather sensing request, the application server generates sensing requirement information and sends the sensing requirement information to the second communication device. Alternatively, the first application sends sensing requirement information to the application server connected to the first application, and the application server forwards the sensing requirement information to the second communication device.

Step 801: The second communication device determines, based on the sensing requirement information, at least one first communication device for performing weather sensing.

Optionally, the second communication device selects, based on sensing area location information in the sensing requirement information or predetermined target area information, at least one first communication device for performing rainfall sensing.

Alternatively, the second communication device selects, based on received rainfall sensing requirement information, a first communication device for performing weather sensing, retrieves baseline calibration data obtained in a calibration process, and sends the sensing requirement information and baseline calibration data to the first communication device.

Step 802: The second communication device forwards the sensing requirement information to the first communication device.

Step 803: The second communication device receives sensing and measurement data or a sensing result reported by the first communication device.

After receiving the sensing requirement information, the first communication device performs a weather sensing task based on the sensing requirement information, and reports the obtained sensing and measurement data or the sensing result to the second communication device. The second communication device receives the sensing and measurement data or the sensing result reported by the first communication device.

FIG. 9 is a third schematic flowchart of a weather sensing method according to an embodiment of this application. As shown in FIG. 9, the method includes the following steps.

Step 900: A second communication device periodically receives sensing and measurement data or a sensing result reported by a first communication device.

It may be understood that, when triggered by a timer, the first communication device periodically performs a rainfall sensing action and obtains a sensing and measurement data or a sensing result. The second communication device periodically receives the sensing and measurement data or the sensing result reported by the first communication device.

In this embodiment of this application, the second communication device selects, based on a user requirement, the first communication device for performing weather sensing, and receives the sensing and measurement data or the sensing result reported by the first communication device, or the second communication device periodically receives the sensing and measurement data or the sensing result reported by the first communication device, thereby implementing weather detection based on self-transmission and self-reception by the communication device, and meeting the user requirement for knowing about weather in real time.

Optionally, the sensing requirement information includes at least one of the following:

sensing area location information, used to indicate a location of a sensing area;
a spatial resolution, used to indicate a spatial granularity of the weather sensing;
a temporal resolution, used to indicate a temporal granularity of the weather sensing; and
sensing repetition configuration information, indicating configuration information for repeating the weather sensing.

Optionally, the sensing repetition configuration information includes at least one of the following:

no repetition;
repetition within a first time range; and
repetition based on a first cycle until a termination condition is met.

Optionally, the weather sensing includes rainfall sensing, and the rainfall sensing includes at least one of the following: detecting rain or no rain in an area; detecting rain or no-rain distribution; and detecting rainfall rate distribution.

Optionally, the method further includes:

performing fusion processing on sensing results reported by each first communication device, to obtain rainfall in the sensing area or a target area; and

sending the rainfall in the sensing area or the target area to a third communication device through a server connected to a first application on the third communication device.

It may be understood that, for the sensing results reported based on the user requirement, the second communication device fuses the sensing results reported by each first communication device to obtain the rainfall in the sensing area, for example, a rainfall map and a rainfall rate distribution map in the sensing area.

For periodically reported sensing results, the second communication device may fuse rainfall sensing results reported by all first communication devices in a large target area (such as a province area or a city area) to obtain rainfall in the target area, for example, a rainfall map and a rainfall rate distribution map in the target area.

The second communication device sends the rainfall in the sensing area or the target area to an application server, and the application server sends the rainfall to the third communication device in which the first application connected to the application server is located.

Optionally, before the performing fusion processing on sensing results reported by each first communication device, the method further includes:

the second communication device obtains the sensing result through calculation based on the sensing and measurement data.

In some optional embodiments, the first communication device sends the sensing and measurement data to the second communication device, for example, a sensing function network element, and the second communication device obtains the sensing result through calculation based on the sensing and measurement data.

For a method for obtaining the sensing result by the second communication device through calculation based on the sensing and measurement data, refer to each process of rainfall sensing performed by the first communication device. Details are not described herein again.

Optionally, the method further includes:

the second communication device obtains reference information about rainfall;

the second communication device determines a rainfall sensing error of the first communication device based on the sensing result and the reference information; and

the second communication device sends the rainfall sensing error of the first communication device to other sensing nodes within an area around the first communication device.

The reference information may be obtained periodically or obtained based on triggering.

Optionally, based on a first request message sent by the first communication device, the second communication device requests to obtain rainfall measurement data from a third-party station, and uses the rainfall measurement data as the reference information.

The reference information is sent from an AF to a NEF and then to the second communication device.

The third-party station includes a meteorological station, a meteorological radar station, another station having a communication function and equipped with a special rainfall measurement device, or the like.

Optionally, the second communication device obtains rainfall measurement data obtained through measurement by a special rainfall measurement device configured for the first communication device, and uses the rainfall measurement data as the reference information.

The special rainfall measurement device includes but is not limited to a rain gauge.

Optionally, the reference information may be requested based on geographical location information.

The first communication device reports a rainfall sensing result to the second communication device, and the second communication device obtains a rainfall sensing error of the first communication device with reference to the rainfall sensing result reported by the first communication device and the reference information.

The second communication device sends rainfall sensing error information to other sensing nodes within an area around the first communication device. The rainfall sensing error information is used by the other sensing nodes to correct their own rainfall sensing errors, thereby improving accuracy of rainfall sensing.

Optionally, the sensing and measurement data includes at least one of the following:

a received echo data matrix;

total received power on various distance resolution cells within duration of a sensing signal frame;

total received echo power on $N_m$ distance resolution cells within the duration of the sensing signal frame, where $N_m$ is a positive integer greater than 1;

a result of a feature analysis of threshold-crossing distance resolution cells; and

received echo power data obtained after the feature analysis of the threshold-crossing distance resolution cells and data preprocessing.

Optionally, the sensing result includes at least one of the following:

a rainfall decision result corresponding to each radiated beam direction;
a rain or no-rain distribution detection result corresponding to each radiated beam direction; and
rainfall rate distribution corresponding to each radiated beam direction in a case of rain.

Optionally, in a case that the first communication device reports the sensing and measurement data, the second communication device further receives sensing assistance information reported by the first communication device, where the sensing assistance information includes:

location information of the first communication device;
sensing signal waveform configuration information;
a time for performing rainfall sensing; and
a radiated beam direction of the first communication device.

Optionally, the first communication device is a terminal, a base station, or a transmission and reception point TRP; and the second communication device is a core network element or a sensing function network element.

In this embodiment of this application, radar signal processing is performed by using self-transmission and self-reception by a mobile communication device, and rainfall detection and rainfall rate distribution detection are implemented with reference to a rain attenuation model, featuring a high temporal resolution and a high spatial resolution. In addition, this embodiment of this application proposes a feature analysis on threshold-crossing distance resolution cells for rainfall rate detection, data preprocessing on received echo power on each distance resolution cell, and an iterative rain attenuation processing algorithm, to improve performance of rainfall rate detection.

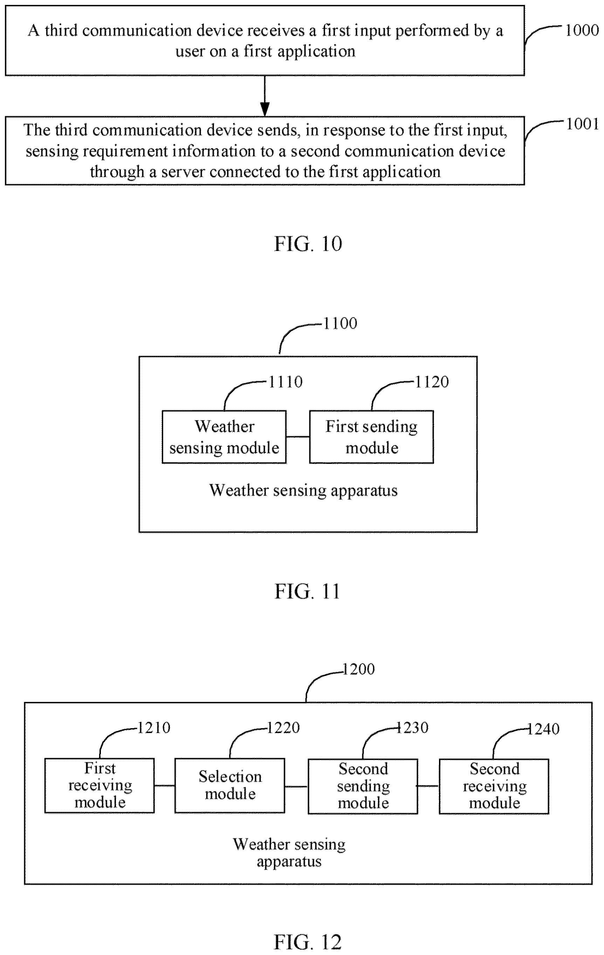

FIG. 10 is a fourth schematic flowchart of a weather sensing method according to an embodiment of this application. As shown in FIG. 10, the weather sensing method includes the following steps.

Step 1000: A third communication device receives a first input performed by a user on a first application.

It may be understood that the first application is an application service provided by a third party other than a core network and an air interface. The first application may also be referred to as a third-party application, including an application installed on a smartphone, a PC, other smart devices, or the like.

The third communication device may be a terminal.

The third communication device receives the first input performed by the user on the first application. The first input is used to request weather sensing.

For example, the first input may be an operation on a target function of the first application. Upon receiving the first input, the first communication device learns that the user requests weather sensing.

Step 1001: The third communication device sends, in response to the first input, sensing requirement information to a second communication device through a server connected to the first application, where the sensing requirement information is used to request weather sensing.

Optionally, the sensing requirement information includes at least one of the following:

sensing area location information, used to indicate a location of a sensing area;
a spatial resolution, used to indicate a spatial granularity of the weather sensing;
a temporal resolution, used to indicate a temporal granularity of the weather sensing; and
sensing repetition configuration information, indicating configuration information for repeating the weather sensing.

Optionally, the sensing repetition configuration information includes at least one of the following:

no repetition;
repetition within a first time range; and
repetition based on a first cycle until a termination condition is met.

Optionally, the weather sensing includes rainfall sensing, and the rainfall sensing includes at least one of the following: detecting rain or no rain in an area; detecting rain or no-rain distribution; and detecting rainfall rate distribution.

Optionally, the method further includes:
the third communication device receives rainfall in the sensing area, sent by the server connected to the first application.

In this embodiment of this application, the third communication device sends a weather sensing requirement to the application server in response to the input performed by the user, then the application server sends the weather sensing requirement to the second communication device, and the second communication device selects the first communication device for performing weather sensing, thereby meeting the user requirement for knowing about weather in real time.

The weather sensing method provided in the embodiments of this application may be performed by a weather sensing apparatus. A weather sensing apparatus provided in the embodiments of this application is described by assuming that the weather sensing method in the embodiments of this application is performed by the weather sensing apparatus.

FIG. 11 is a first schematic diagram of a structure of a weather sensing apparatus according to an embodiment of this application. As shown in FIG. 11, the weather sensing apparatus 1100 includes:

a weather sensing module 1110, configured to perform weather sensing to obtain sensing and measurement data or a sensing result in a case that a first condition is met; and
a first sending module 1120, configured to report the sensing and measurement data or the sensing result to a second communication device, where
the first condition includes at least one of the following that:

sensing requirement information is received from the second communication device, where the sensing requirement information is used to request the weather sensing; and
a periodic sensing time arrives.

In this embodiment of this application, the weather sensing apparatus performs weather sensing based on a user requirement or periodically to obtain the sensing and measurement data or the sensing result, thereby implementing weather detection based on self-transmission and self-reception by the communication device, and meeting the user requirement for knowing about weather in real time.

Optionally, the sensing requirement information includes at least one of the following:

sensing area location information, used to indicate a location of a sensing area;
a spatial resolution, used to indicate a spatial granularity of the weather sensing;
a temporal resolution, used to indicate a temporal granularity of the weather sensing; and
sensing repetition configuration information, indicating configuration information for repeating the weather sensing.

Optionally, the sensing repetition configuration information includes at least one of the following:

no repetition;
repetition within a first time range; and
repetition based on a first cycle until a termination condition is met.

Optionally, the performing, by a first communication device, weather sensing to obtain sensing and measurement data or a sensing result includes:

transmitting, by the first communication device, a first signal, and receiving an echo signal; and
processing, by the first communication device, the echo signal to obtain the sensing and measurement data or the sensing result.

Optionally, the weather sensing includes rainfall sensing, and the rainfall sensing includes at least one of the following: detecting rain or no rain in an area; detecting rain or no-rain distribution; and detecting rainfall rate distribution.

Optionally, the performing weather sensing to obtain sensing and measurement data or a sensing result includes:

determining a beam-pointing angle, transmitting the first signal based on the beam-pointing angle, and receiving the echo signal;
preprocessing the echo signal to obtain an echo preprocessing result;
detecting rain or no rain in the area and performing data preprocessing based on the echo preprocessing result and a rainfall decision threshold, and outputting a rainfall decision result and a rain or no-rain distribution detection result; and
in a case that the rainfall decision result is rain, detecting rainfall rate distribution based on a wet aperture attenuation value to obtain the rainfall rate distribution.

Optionally, in a case that the sensing requirement information is received from the second communication device, the weather sensing module 1110 is configured to:

obtain baseline calibration data, where the baseline calibration data includes the rainfall decision threshold and the wet aperture attenuation value;

determine the beam-pointing angle based on the sensing area location information in the sensing requirement information or predetermined target area information in combination with location information of the first communication device;

transmit the first signal based on the beam-pointing angle, and receive the echo signal;

preprocess the echo signal to obtain the echo preprocessing result;

detect rain or no rain in the area based on the echo preprocessing result and the rainfall decision threshold, perform the data preprocessing, and output the rainfall decision result and the rain or no-rain distribution detection result;

in a case that the rainfall decision result is rain, perform a procedure for detecting rainfall rate distribution based on the wet aperture attenuation value to obtain radial rainfall rate distribution that uses a radar detection distance resolution within a maximum coverage distance range of the first communication device as a resolution cell, and obtain rainfall rate distribution at each position on a horizontal plane through projection based on an included angle between a radiated beam and the horizontal plane; and

in a case that the first communication device cannot completely cover the sensing area through one beam dwelling, adjust the beam-pointing angle and perform rainfall sensing through a next beam dwelling until the sensing area is completely covered, to obtain a rainfall map and a rainfall rate distribution map in the sensing area.

In this embodiment of this application, for an integrated communication and sensing scenario, a specific procedure for performing rainfall sensing is provided. The first communication device performs rainfall sensing based on the user requirement and reports the sensing and measurement data or the sensing result, thereby implementing rainfall detection based on self-transmission and self-reception by the communication device, and meeting the user requirement for knowing about rainfall in real time.

Optionally, in a case that the periodic sensing time arrives, the weather sensing module 1110 is configured to:

obtain baseline calibration data, where the baseline calibration data includes the rainfall decision threshold and the wet aperture attenuation value;

transmit the first signal based on an azimuth width of a radiated antenna beam, and receive the echo signal;

preprocess the echo signal to obtain the echo preprocessing result;

detect rain or no rain in the area based on the echo preprocessing result and the rainfall decision threshold, perform the data preprocessing, and output the rainfall decision result and the rain or no-rain distribution detection result;

in a case that the rainfall decision result is rain, perform a procedure for detecting rainfall rate distribution based on the wet aperture attenuation value to obtain radial rainfall rate distribution that uses a radar detection distance resolution within a maximum coverage distance range of the first communication device as a resolution cell, and obtain rainfall rate distribution at each position on a horizontal plane through projection based on an included angle between a radiated beam and the horizontal plane;

after completing rainfall detection at an angle, terminate dwelling in a current beam direction, shift the beam direction by an angle of one azimuth width and perform rainfall sensing in a next angular sector area until an azimuth covers an allowed maximum angle range, and then terminate rainfall sensing in a current cycle; and

perform fusion processing on rainfall sensing results in various beam directions to obtain a rainfall map and a rainfall rate distribution map in a circular area with the first communication device as a center and a maximum coverage distance of the first communication device as a radius.

In this embodiment of this application, for the integrated communication and sensing scenario, a specific procedure for performing rainfall sensing is provided. The first communication device periodically performs rainfall sensing and reports the sensing and measurement data or the sensing result, thereby implementing rainfall detection based on self-transmission and self-reception by the communication device, and meeting the user requirement for knowing about rainfall in real time.

Optionally, the rainfall decision threshold is obtained by using the following calibration method:

transmitting the first signal and receiving an echo in sunny weather and lightly rainy weather separately to obtain a first data matrix and a second data matrix whose sizes are $N_p \times N_m$ within duration of a sensing signal frame respectively, where $N_m$ values in each row of the first data matrix or in each row of the second data matrix are received echo power values on various distance resolution cells in one sensing signal cycle, $N_p$ values in each column are received echo power values on one distance resolution cell in different sensing signal cycles, $N_p$ is a positive integer greater than 1, and $N_m$ is a positive integer greater than 1;

summating each column of the first data matrix and the second data matrix separately to obtain first total received power and second total received power on various distance resolution cells within the duration of the sensing signal frame;

repeating in $N_b$ sensing signal frames to obtain first average values and second average values of received echo power on various distance resolution cells within first duration, where the first duration includes the $N_b$ sensing signal frames, and $N_b$ is a positive integer greater than or equal to 1;

summating the first average values of the received echo power on various distance resolution cells within the first duration to obtain a third average value of total received echo power within the first duration, and summating the second average values of the received echo power on various distance resolution cells within the first duration to obtain a fourth average value of the total received echo power within the first duration;

obtaining a first decision threshold based on the third average value and the fourth average value of the total received echo power within the first duration, where the first decision threshold is used to decide the total received echo power within the duration of the sensing signal frame to determine whether there is rain or no rain; and

obtaining a second decision threshold based on the first average values and the second average values of the received echo power on various distance resolution cells within the first duration, where the second decision threshold is used to make a decision on the received echo power on various distance resolution cells.

Optionally, the first signal includes one of the following:

a communication-dominant signal;
a sensing-dominant signal;
a sensing-enhanced communication-dominant signal; and
an integrated communication and sensing signal; and
a waveform of the first signal is a continuous wave waveform or a pulse waveform.

Optionally, the preprocessing the echo signal to obtain an echo preprocessing result includes:

in each sensing signal cycle, performing matched filtering processing on the echo signal received by the first communication device;

dividing a maximum detection distance of the first communication device into $N_m$ distance resolution cells, obtaining received echo power of the echo signal on each distance resolution cell in each sensing signal cycle, and generating a received echo data matrix;

summating each column of the received echo data matrix to obtain a $1 \times N_m$, vector, where the vector represents total received power on various distance resolution cells within duration of a sensing signal frame; and

summating the total received power on various distance resolution cells within the duration of the sensing signal frame to obtain total received echo power on the $N_m$ distance resolution cells within the duration of the sensing signal frame, where

the sensing signal frame includes $N_p$ sensing signal cycles, and the sensing signal cycle is a cycle for transmitting the first signal once and performing echo signal processing; and

the received echo data matrix is an $N_p \times N_m$ matrix, $N_p$ is a positive integer greater than 1, and $N_m$ is a positive integer greater than 1.

Optionally, the detecting rain or no rain in the area based on the echo preprocessing result and the rainfall decision threshold, performing the data preprocessing, and outputting the rainfall decision result and the rain or no-rain distribution detection result includes:

deciding, based on the first decision threshold, total received echo power of $N_m$ distance resolution cells within the duration of the sensing signal frame to determine whether there is rain or no rain, to obtain a first decision result;

in a case that the first decision result is rain, making a decision on received echo power on each distance resolution cell within the duration of the sensing signal frame based on the second decision threshold, to obtain a decision result on the received echo power on each distance resolution cell;

collecting statistics of decision results on the received echo power on various distance resolution cells, analyzing a quantity of threshold-crossing distance resolution cells based on a statistical result, and outputting the rainfall decision result; and

in a case that a ratio of the quantity of the threshold-crossing distance resolution cells to a total quantity of distance resolution cells exceeds a first threshold, performing a feature analysis on the threshold-crossing distance resolution cells, performing data preprocessing on a result of the feature analysis of the threshold-crossing distance resolution cells, and outputting the rain or no-rain distribution detection result.

Optionally, the performing a feature analysis on the threshold-crossing distance resolution cells, performing data preprocessing on a result of the feature analysis of the threshold-crossing distance resolution cells, and outputting the rain or no-rain distribution detection result in a case that a ratio of the quantity of the threshold-crossing distance resolution cells to a total quantity of distance resolution cells exceeds a first threshold includes:

collecting statistics of blocks (Block) and gaps (Gap) of all the distance resolution cells starting from a first threshold-crossing distance resolution cell, where the block is used to represent rain, and the gap is used to represent no rain, and obtaining $N_B$ blocks and $N_G$ gaps, each of which includes a quantity of distance resolution cells, where $N_B$ is a positive integer greater than or equal to 1, and $N_G$ is a positive integer greater than or equal to 1;

for an i-th block, in a case that the i-th block includes one distance resolution cell and that quantities of distance resolution cells included in two gaps adjacent to the i-th block meet a first preset condition, changing a decision result on the distance resolution cell included in the i-th block to "non-threshold-crossing", combining the i-th block and the two gaps adjacent to the i-th block into a new gap, and changing a received echo power value on the distance resolution cell included in the i-th block to an average value of received echo power on all the distance resolution cells in the two gaps adjacent to the i-th block;

for an i-th gap, in a case that the i-th gap includes one distance resolution cell and that quantities of distance resolution cells included in two blocks adjacent to the i-th gap meet the first preset condition, changing a decision result on the distance resolution cell included in the i-th gap to "threshold-crossing", combining the i-th gap and the two blocks adjacent to the i-th gap into a new block, and changing a received echo power value on the distance resolution cell included in the i-th gap to an average value of received echo power on all the distance resolution cells in the two blocks adjacent to the i-th gap; and

outputting a block set and a gap set, where

i is a natural number greater than or equal to 1;

in a case that the i-th block is a first block, only a first gap subsequent to the i-th block is considered; or in a case that the i-th block is a last block, only a gap previous to the i-th block is considered; and

in a case that the i-th gap is a first gap, only a first block subsequent to the i-th gap is considered; or in a case that the i-th gap is a last gap, only a block previous to the i-th gap is considered.

Optionally, the performing a procedure for detecting rainfall rate distribution based on the wet aperture attenuation value in a case that the rainfall decision result is rain includes:

calculating a volume scattering rate of each threshold-crossing distance resolution cell based on received echo power data obtained after the feature analysis of the threshold-crossing distance resolution cells and the data preprocessing, and the wet aperture attenuation value;

obtaining a scattering rate factor of each threshold-crossing distance resolution cell based on a Rayleigh scattering model and the volume scattering rate of each threshold-crossing distance resolution cell;

obtaining a rainfall rate of each threshold-crossing distance resolution cell based on the scattering rate factor of each threshold-crossing distance resolution cell and a relationship between the scattering rate factor and the rainfall rate; and

obtaining rainfall rate distribution in the current beam direction in a case of rain with reference to the rainfall rate of each threshold-crossing distance resolution cell.

Optionally, the performing a procedure for detecting rainfall rate distribution based on the wet aperture attenuation value in a case that the rainfall decision result is rain includes:

obtaining halfway rain attenuation of the echo signal on an i-th threshold-crossing distance resolution cell based on a rainfall rate of the first threshold-crossing distance resolution cell to a rainfall rate of an (i-1)-th threshold-crossing distance resolution cell, and a relationship between the rain attenuation and the rainfall rate, where i is a positive integer greater than 1;

calculating a volume scattering rate of the i-th threshold-crossing distance resolution cell based on the halfway rain attenuation of the echo signal on the i-th threshold-crossing distance resolution cell, received echo power data on the i-th threshold-crossing distance resolution cell, and the wet aperture attenuation value;

obtaining a scattering rate factor of the i-th threshold-crossing distance resolution cell based on a Rayleigh scattering model and the volume scattering rate of the i-th threshold-crossing distance resolution cell;

obtaining a rainfall rate of the i-th threshold-crossing distance resolution cell based on the scattering rate factor of the i-th threshold-crossing distance resolution cell and a relationship between the scattering rate factor and the rainfall rate;

adding 1 to i and calculating a rainfall rate of a next threshold-crossing distance resolution cell until rainfall rates of all the threshold-crossing distance resolution cells are obtained; and
obtaining rainfall rate distribution in the current beam direction in a case of rain with reference to the rainfall rates of all the threshold-crossing distance resolution cell, where
the rainfall rate of the first threshold-crossing distance resolution cell is obtained through calculation without considering halfway rain attenuation.

The weather sensing apparatus provided in this embodiment of this application obtains a rainfall rate and rainfall rate distribution on a detection path based on the received echo power on each distance resolution cell and a scattering rate factor model of Rayleigh scattering. The apparatus has the following beneficial effects:

(1) A joint rain or no-rain decision based on the total received echo power and the received echo power on each distance resolution cell is proposed, to accurately detect whether it rains.
(2) A detected signal-to-noise ratio is increased based on coherent superposition of echoes in a plurality of sensing signal cycles within the sensing signal frame, and it is proposed that data preprocessing should be performed on the received echo power on each distance resolution cell based on the feature analysis of the threshold-crossing distance resolution cells, to improve accuracy of rainfall rate distribution detection.
(3) Considering impact of halfway rain attenuation on rainfall rate measurement, an iterative rain attenuation processing algorithm is proposed, and is especially suitable for scenarios with high carrier frequencies, long paths, or high rainfall intensity. The algorithm improves performance of rainfall rate detection.

Optionally, the sensing and measurement data includes at least one of the following:

a received echo data matrix;
total received power on various distance resolution cells within duration of a sensing signal frame;
total received echo power on $N_m$ distance resolution cells within the duration of the sensing signal frame, where $N_m$ is a positive integer greater than 1;
a result of a feature analysis of threshold-crossing distance resolution cells; and
received echo power data obtained after the feature analysis of the threshold-crossing distance resolution cells and data preprocessing.

Optionally, the sensing result includes at least one of the following:

a rainfall decision result corresponding to each radiated beam direction;
a rain or no-rain distribution detection result corresponding to each radiated beam direction; and
rainfall rate distribution corresponding to each radiated beam direction in a case of rain.

Optionally, in a case that the first communication device reports the sensing and measurement data, the apparatus further includes:

a sensing assistance information sending module, configured to report sensing assistance information to the second communication device, where the sensing assistance information includes:

location information of the first communication device;
sensing signal waveform configuration information;
a time for performing rainfall sensing; and
a radiated beam direction of the first communication device.

Optionally, the apparatus further includes:
a first obtaining module, configured to obtain reference information about rainfall, where the reference information is used to determine a rainfall sensing error of the first communication device.
Optionally, the obtaining reference information about rainfall includes:

sending a first request message to the second communication device, where the first request message is used to request to obtain rainfall measurement data of a third-party station; and receiving the rainfall measurement data returned by the second communication device, and using the rainfall measurement data as the reference information; or
obtaining rainfall measurement data by using a rainfall measurement device configured for the first communication device, and using the rainfall measurement data as the reference information.

Optionally, the first communication device is a terminal, a base station, or a transmission and reception point TRP; and the second communication device is a core network element or a sensing function network element.

In this embodiment of this application, radar signal processing is performed by using self-transmission and self-reception by a mobile communication device, and rainfall detection and rainfall rate distribution detection are implemented with reference to a rain attenuation model, featuring a high temporal resolution and a high spatial resolution. In addition, this embodiment of this application proposes a feature analysis on threshold-crossing distance resolution cells for rainfall rate detection, data preprocessing on received echo power on each distance resolution cell, and an iterative rain attenuation processing algorithm, to improve performance of rainfall rate detection.

The weather sensing apparatus in this embodiment of this application may be a communication device, for example, a communication device with an operating system, or may be a component in a communication device, for example, an integrated circuit or a chip. The communication device may be a terminal, or may be other devices than a terminal. For example, the communication device may include but is not limited to the foregoing illustrated type of the terminal 11. The other devices may be a server, a network attached storage (Network Attached Storage, NAS), and the like. This is not specifically limited in this embodiment of this application.

The weather sensing apparatus provided in this embodiment of this application can implement each process implemented by the method embodiments in FIG. 4 to FIG. 7, with the same technical effect achieved. To avoid repetition, details are not described herein again.

FIG. 12 is a second schematic diagram of a structure of a weather sensing apparatus according to an embodiment of this application. As shown in FIG. 12, the weather sensing apparatus 1200 includes:

a first receiving module 1210, configured to receive sensing requirement information sent by a third communication device, where the sensing requirement information is used to request weather sensing;
a selection module 1220, configured to determine, based on the sensing requirement information, at least one first communication device for performing weather sensing;
a second sending module 1230, configured to forward the sensing requirement information to the first communication device; and
a second receiving module 1240, configured to receive sensing and measurement data or a sensing result reported by the first communication device.

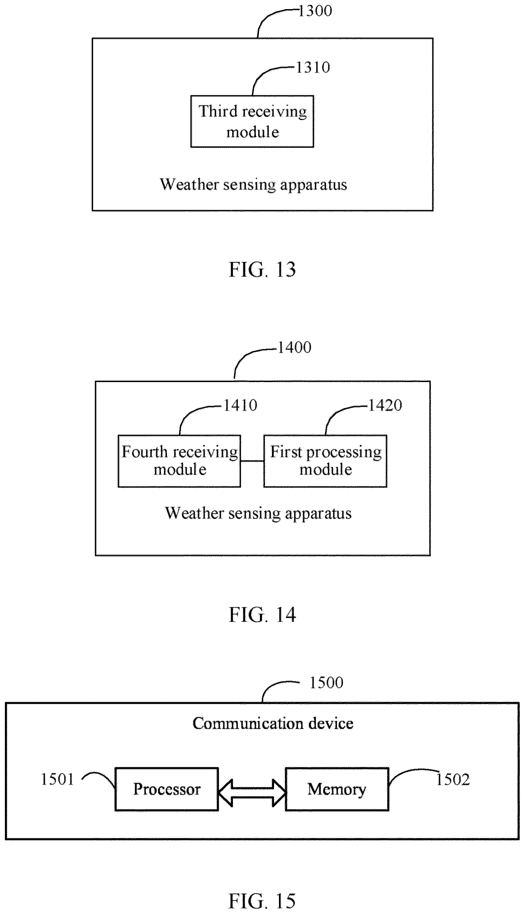

FIG. 13 is a third schematic diagram of a structure of a weather sensing apparatus according to an embodiment of this application. As shown in FIG. 13, the weather sensing apparatus 1300 includes:
a third receiving module 1310, configured to periodically receive sensing and measurement data or a sensing result reported by a first communication device.

In this embodiment of this application, the weather sensing apparatus selects, based on a user requirement, the first communication device for performing weather sensing, and receives the sensing and measurement data or the sensing result reported by the first communication device, or the second communication device periodically receives the sensing and measurement data or the sensing result reported by the first communication device, thereby implementing weather detection based on self-transmission and self-reception by the communication device, and meeting the user requirement for knowing about weather in real time.

Optionally, the sensing requirement information includes at least one of the following:

sensing area location information, used to indicate a location of a sensing area;
a spatial resolution, used to indicate a spatial granularity of the weather sensing;
a temporal resolution, used to indicate a temporal granularity of the weather sensing; and
sensing repetition configuration information, indicating configuration information for repeating the weather sensing.

Optionally, the sensing repetition configuration information includes at least one of the following:

no repetition;
repetition within a first time range; and
repetition based on a first cycle until a termination condition is met.

Optionally, the weather sensing includes rainfall sensing, and the rainfall sensing includes at least one of the following: detecting rain or no rain in an area; detecting rain or no-rain distribution; and detecting rainfall rate distribution.

Optionally, the apparatus further includes:

a fusion processing module, configured to perform fusion processing on sensing results reported by each first communication device, to obtain rainfall in the sensing area or a target area; and

a third sending module, configured to send the rainfall in the sensing area or the target area to the third communication device through a server connected to a first application on the third communication device.

Optionally, the apparatus further includes:
a sensing calculation module, configured to obtain the sensing result through calculation based on the sensing and measurement data.

Optionally, the apparatus further includes:

a second obtaining module, configured to obtain reference information about rainfall;
a sensing error determining module, configured to determine a rainfall sensing error of the first communication device based on the sensing result and the reference information; and
a fourth sending module, configured to send the rainfall sensing error of the first communication device to other sensing nodes within an area around the first communication device.

Optionally, the sensing and measurement data includes at least one of the following:

a received echo data matrix;
total received power on various distance resolution cells within duration of a sensing signal frame;
total received echo power on $N_m$ distance resolution cells within the duration of the sensing signal frame, where $N_m$ is a positive integer greater than 1;
a result of a feature analysis of threshold-crossing distance resolution cells; and
received echo power data obtained after the feature analysis of the threshold-crossing distance resolution cells and data preprocessing.

Optionally, the sensing result includes at least one of the following:

a rainfall decision result corresponding to each radiated beam direction;
a rain or no-rain distribution detection result corresponding to each radiated beam direction; and
rainfall rate distribution corresponding to each radiated beam direction in a case of rain.

Optionally, in a case that the first communication device reports the sensing and measurement data, the apparatus further includes:
a fourth receiving module, configured to receive sensing assistance information reported by the first communication device, where the sensing assistance information includes:

location information of the first communication device;
sensing signal waveform configuration information;
a time for performing rainfall sensing; and
a radiated beam direction of the first communication device.

Optionally, the first communication device is a terminal, a base station, or a transmission and reception point TRP; and the second communication device is a core network element or a sensing function network element.

In this embodiment of this application, radar signal processing is performed by using self-transmission and self-reception by a mobile communication device, and rainfall detection and rainfall rate distribution detection are implemented with reference to a rain attenuation model, featuring a high temporal resolution and a high spatial resolution. In addition, this embodiment of this application proposes a feature analysis on threshold-crossing distance resolution cells for rainfall rate detection, data preprocessing on received echo power on each distance resolution cell, and an iterative rain attenuation processing algorithm, to improve performance of rainfall rate detection.

The weather sensing apparatus in this embodiment of this application may be a communication device, for example, a communication device with an operating system, or may be a component in a communication device, for example, an integrated circuit or a chip. The communication device may be a terminal, or may be other devices than a terminal. For example, the communication device may include but is not limited to the foregoing illustrated type of the terminal 11. The other devices may be a server, a network attached storage (Network Attached Storage, NAS), and the like. This is not specifically limited in this embodiment of this application.

The weather sensing apparatus provided in this embodiment of this application can implement each process implemented by the method embodiments in FIG. 8 and FIG. 9, with the same technical effect achieved. To avoid repetition, details are not described herein again.

FIG. 14 is a fourth schematic diagram of a structure of a weather sensing apparatus according to an embodiment of this application. As shown in FIG. 14, the weather sensing apparatus 1400 includes:

a fourth receiving module 1410, configured to receive a first input performed by a user on a first application; and
a first processing module 1420, configured to send, in response to the first input, sensing requirement information to a second communication device through a server connected to the first application, where
the sensing requirement information is used to request weather sensing.

Optionally, the sensing requirement information includes at least one of the following:

sensing area location information, used to indicate a location of a sensing area;
a spatial resolution, used to indicate a spatial granularity of the weather sensing;
a temporal resolution, used to indicate a temporal granularity of the weather sensing; and
sensing repetition configuration information, indicating configuration information for repeating the weather sensing.

Optionally, the sensing repetition configuration information includes at least one of the following:

no repetition;
repetition within a first time range; and
repetition based on a first cycle until a termination condition is met.

Optionally, the weather sensing includes rainfall sensing, and the rainfall sensing includes at least one of the following: detecting rain or no rain in an area; detecting rain or no-rain distribution; and detecting rainfall rate distribution.
Optionally, the apparatus further includes:
a fifth receiving module, configured to receive rainfall in the sensing area, sent by the server connected to the first application.
In this embodiment of this application, the weather sensing apparatus sends a weather sensing requirement to the application server in response to the input performed by the user, then the application server sends the weather sensing requirement to the second communication device, and the second communication device selects the first communication device for performing weather sensing, thereby meeting the user requirement for knowing about weather in real time.
The weather sensing apparatus in this embodiment of this application may be a communication device, for example, a communication device with an operating system, or may be a component in a communication device, for example, an integrated circuit or a chip. The communication device may be a terminal, or may be other devices than a terminal. For example, the communication device may include but is not limited to the foregoing illustrated type of the terminal 11. The other devices may be a server, a network attached storage (Network Attached Storage, NAS), and the like. This is not specifically limited in this embodiment of this application.
The weather sensing apparatus provided in this embodiment of this application can implement each process implemented by the method embodiment in FIG. 10, with the same technical effect achieved. To avoid repetition, details are not described herein again.
Optionally, as shown in FIG. 15, an embodiment of this application further provides a communication device 1500, including a processor 1501 and a memory 1502. A program or instructions are stored in the memory 1502 and executable on the processor 1501. For example, when the communication device 1500 is a first communication device, and the program or instructions are executed by the processor 1501, each step of the foregoing embodiment of the weather sensing method on the first communication device side is implemented, with the same technical effect achieved. When the communication device 1500 is a second communication device, and the program or instructions are executed by the processor 1501, each step of the foregoing embodiment of the weather sensing method on the second communication device side is implemented, with the same technical effect achieved. When the communication device 1500 is a third communication device, and the program or instructions are executed by the processor 1501, each step of the foregoing embodiment of the weather sensing method on the third communication device side is implemented, with the same technical effect achieved. To avoid repetition, details are not described herein again.
An embodiment of this application further provides a first communication device, including a processor and a communication interface. The processor is configured to: in a case that a first condition is met, perform weather sensing to obtain sensing and measurement data or a sensing result. The communication interface is configured to report the sensing and measurement data or the sensing result to a second communication device, where the first condition includes at least one of the following that: sensing requirement information is received from the second communication device, where the sensing requirement information is used to request the weather sensing; and a periodic sensing time arrives. The first communication device embodiment corresponds to the foregoing method embodiment on the first communication device side, and each implementation process and implementation of the foregoing method embodiment can be applied to the first communication device embodiment, with the same technical effect achieved.

An embodiment of this application further provides a second communication device, including a processor and a communication interface. The communication interface is configured to receive sensing requirement information sent by a third communication device, where the sensing requirement information is used to request weather sensing. The processor is configured to determine, based on the sensing requirement information, at least one first communication device for performing weather sensing. The communication interface is further configured to forward the sensing requirement information to the first communication device. The communication interface is further configured to receive sensing and measurement data or a sensing result reported by the first communication device; or the communication interface is configured to periodically receive sensing and measurement data or a sensing result reported by the first communication device. The second communication device embodiment corresponds to the foregoing method embodiment on the second communication device side, and each implementation process and implementation of the foregoing method embodiment can be applied to the second communication device embodiment, with the same technical effect achieved.

An embodiment of this application further provides a third communication device, including a processor and a communication interface. The processor is configured to: receive a first input performed by a user on a first application; and send, in response to the first input, sensing requirement information to a second communication device through a server connected to the first application. The third communication device embodiment corresponds to the foregoing method embodiment on the third communication device side, and each implementation process and implementation of the foregoing method embodiment can be applied to the third communication device embodiment, with the same technical effect achieved.

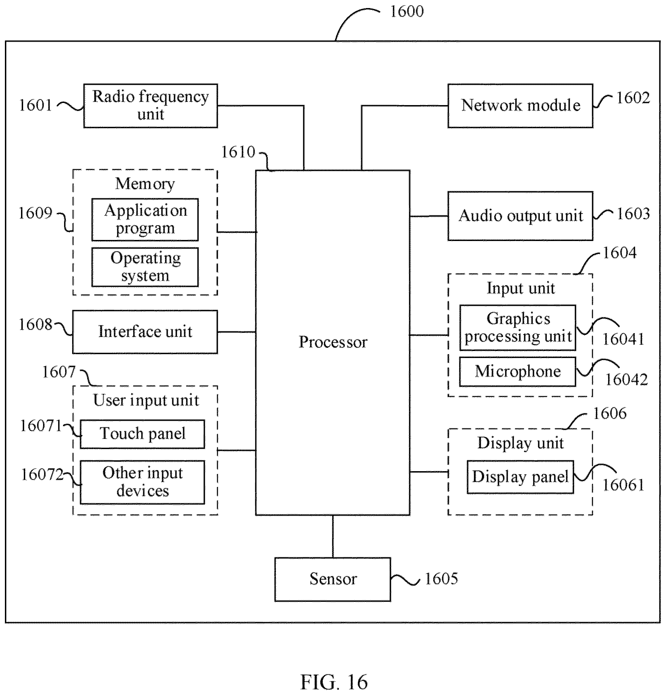

Specifically, FIG. 16 is a schematic diagram of a hardware structure of a terminal for implementing an embodiment of this application. The terminal 1600 may be a first communication device or a third communication device.

The terminal 1600 includes but is not limited to at least some components such as a radio frequency unit 1601, a network module 1602, an audio output unit 1603, an input unit 1604, a sensor 1605, a display unit 1606, a user input unit 1607, an interface unit 1608, a memory 1609, and a processor 1610.

A person skilled in the art may understand that the communication device 1600 may further include a power supply (such as a battery) for supplying power to the components. The power supply may be logically connected to the processor 1610 through a power management system. In this way, functions such as charge management, discharge management, and power consumption management are implemented by using the power management system. The structure of the communication device shown in FIG. 16 does not constitute a limitation on the communication device. The communication device may include more or fewer components than those shown in the figure, or some components are combined, or component arrangements are different. Details are not described herein again.

It should be understood that, in this embodiment of this application, the input unit 1604 may include a graphics processing unit (Graphics Processing Unit, GPU) 16041 and a microphone 16042. The graphics processing unit 16041 processes image data of a still picture or video obtained by an image capture apparatus (such as a camera) in a video capture mode or an image capture mode. The display unit 1606 may include a display panel 16061, and the display panel 16061 may be configured in a form of a liquid crystal display, an organic light-emitting diode, or the like. The user input unit 1607 includes at least one of a touch panel 16071 and other input devices 16072. The touch panel 16071 is also referred to as a touchscreen. The touch panel 16071 may include two parts: a touch detection apparatus and a touch controller. The other input devices 16072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 1601 may transmit the downlink data to the processor 1610 for processing. In addition, the radio frequency unit 1601 may send uplink data to the network-side device. Usually, the radio frequency unit 1601 includes but is not limited to an antenna, an amplifier, a transceiver, a coupler, a low noise amplifier, a duplexer, and the like.

The memory 1609 may be configured to store software programs or instructions and various data. The memory 1609 may primarily include a first storage area for storing programs or instructions and a second storage area for storing data. The first storage area may store an operating system, an application program or instructions required by at least one function (such as an audio play function and an image play function), and the like. In addition, the memory 1609 may include a volatile memory or a non-volatile memory, or the memory 1609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 1609 in this embodiment of this application includes but is not limited to these and any other suitable types of memories.

The processor 1610 may include one or more processing units. Optionally, the processor 1610 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively not be integrated in the processor 1610.

The processor 1610 is configured to perform weather sensing to obtain sensing and measurement data or a sensing result in a case that a first condition is met.

The radio frequency unit 1601 is configured to report the sensing and measurement data or the sensing result to a second communication device.

The first condition includes at least one of the following that: sensing requirement information is received from the second communication device, where the sensing requirement information is used to request the weather sensing; and a periodic sensing time arrives.

In this embodiment of this application, the first communication device performs weather sensing based on a user requirement or periodically to obtain the sensing and measurement data or the sensing result, thereby implementing weather detection based on self-transmission and self-reception by the communication device, and meeting the user requirement for knowing about weather in real time.

Optionally, the sensing requirement information includes at least one of the following:

sensing area location information, used to indicate a location of a sensing area;
a spatial resolution, used to indicate a spatial granularity of the weather sensing;
a temporal resolution, used to indicate a temporal granularity of the weather sensing; and
sensing repetition configuration information, indicating configuration information for repeating the weather sensing.

Optionally, the sensing repetition configuration information includes at least one of the following:

no repetition;
repetition within a first time range; and
repetition based on a first cycle until a termination condition is met.

Optionally, the performing, by the first communication device, weather sensing to obtain sensing and measurement data or a sensing result includes:

transmitting, by the first communication device, a first signal, and receiving an echo signal; and
processing, by the first communication device, the echo signal to obtain the sensing and measurement data or the sensing result.

Optionally, the weather sensing includes rainfall sensing, and the rainfall sensing includes at least one of the following: detecting rain or no rain in an area; detecting rain or no-rain distribution; and detecting rainfall rate distribution.

Optionally, the performing, by the first communication device, weather sensing to obtain sensing and measurement data or a sensing result includes:

determining a beam-pointing angle, transmitting the first signal based on the beam-pointing angle, and receiving the echo signal;
preprocessing the echo signal to obtain an echo preprocessing result;
detecting rain or no rain in the area and performing data preprocessing based on the echo preprocessing result and a rainfall decision threshold, and outputting a rainfall decision result and a rain or no-rain distribution detection result; and
in a case that the rainfall decision result is rain, detecting rainfall rate distribution based on a wet aperture attenuation value to obtain the rainfall rate distribution.

Optionally, in a case that the sensing requirement information is received from the second communication device, the processor 1610 is configured to:

obtain baseline calibration data, where the baseline calibration data includes the rainfall decision threshold and the wet aperture attenuation value;

determine the beam-pointing angle based on the sensing area location information in the sensing requirement information or predetermined target area information in combination with location information of the first communication device;

transmit the first signal based on the beam-pointing angle, and receive the echo signal;

preprocess the echo signal to obtain the echo preprocessing result;

detect rain or no rain in the area based on the echo preprocessing result and the rainfall decision threshold, perform the data preprocessing, and output the rainfall decision result and the rain or no-rain distribution detection result;

in a case that the rainfall decision result is rain, perform a procedure for detecting rainfall rate distribution based on the wet aperture attenuation value to obtain radial rainfall rate distribution that uses a radar detection distance resolution within a maximum coverage distance range of the first communication device as a resolution cell, and obtain rainfall rate distribution at each position on a horizontal plane through projection based on an included angle between a radiated beam and the horizontal plane; and

in a case that the first communication device cannot completely cover the sensing area through one beam dwelling, adjust the beam-pointing angle and perform rainfall sensing through a next beam dwelling until the sensing area is completely covered, to obtain a rainfall map and a rainfall rate distribution map in the sensing area.

In this embodiment of this application, for an integrated communication and sensing scenario, a specific procedure for performing rainfall sensing is provided. The first communication device performs rainfall sensing based on the user requirement and reports the sensing and measurement data or the sensing result, thereby implementing rainfall detection based on self-transmission and self-reception by the communication device, and meeting the user requirement for knowing about rainfall in real time.

Optionally, in a case that the periodic sensing time arrives, the processor 1610 is configured to:

obtain baseline calibration data, where the baseline calibration data includes the rainfall decision threshold and the wet aperture attenuation value;

transmit the first signal based on an azimuth width of a radiated antenna beam, and receive the echo signal;

preprocess the echo signal to obtain the echo preprocessing result;

detect rain or no rain in the area based on the echo preprocessing result and the rainfall decision threshold, perform the data preprocessing, and output the rainfall decision result and the rain or no-rain distribution detection result;

in a case that the rainfall decision result is rain, perform a procedure for detecting rainfall rate distribution based on the wet aperture attenuation value to obtain radial rainfall rate distribution that uses a radar detection distance resolution within a maximum coverage distance range of the first communication device as a resolution cell, and obtain rainfall rate distribution at each position on a horizontal plane through projection based on an included angle between a radiated beam and the horizontal plane;

after completing rainfall detection at an angle, terminating dwelling in a current beam direction, shift the beam direction by an angle of one azimuth width and perform rainfall sensing in a next angular sector area until an azimuth covers an allowed maximum angle range, and then terminate rainfall sensing in a current cycle; and

perform fusion processing on rainfall sensing results in various beam directions to obtain a rainfall map and a rainfall rate distribution map in a circular area with the first communication device as a center and a maximum coverage distance of the first communication device as a radius.

In this embodiment of this application, for the integrated communication and sensing scenario, a specific procedure for performing rainfall sensing is provided. The first communication device periodically performs rainfall sensing and reports the sensing and measurement data or the sensing result, thereby implementing rainfall detection based on self-transmission and self-reception by the communication device, and meeting the user requirement for knowing about rainfall in real time.

Optionally, the rainfall decision threshold is obtained by using the following calibration method:

transmitting the first signal and receiving an echo in sunny weather and lightly rainy weather separately to obtain a first data matrix and a second data matrix whose sizes are $N_p \times N_m$ within duration of a sensing signal frame respectively, where $N_m$ values in each row of the first data matrix or in each row of the second data matrix are received echo power values on various distance resolution cells in one sensing signal cycle, $N_p$ values in each column are received echo power values on one distance resolution cell in different sensing signal cycles, $N_p$ is a positive integer greater than 1, and $N_m$ is a positive integer greater than 1;

summing each column of the first data matrix and the second data matrix separately to obtain first total received power and second total received power on various distance resolution cells within the duration of the sensing signal frame;

repeating in $N_b$ sensing signal frames to obtain first average values and second average values of received echo power on various distance resolution cells within first duration, where the first duration includes the $N_b$ sensing signal frames, and $N_b$ is a positive integer greater than or equal to 1;

summating the first average values of the received echo power on various distance resolution cells within the first duration to obtain a third average value of total received echo power within the first duration, and summating the second average values of the received echo power on various distance resolution cells within the first duration to obtain a fourth average value of the total received echo power within the first duration;

obtaining a first decision threshold based on the third average value and the fourth average value of the total received echo power within the first duration, where the first decision threshold is used to decide the total received echo power within the duration of the sensing signal frame to determine whether there is rain or no rain; and

obtaining a second decision threshold based on the first average values and the second average values of the received echo power on various distance resolution cells within the first duration, where the second decision threshold is used to make a decision on the received echo power on various distance resolution cells.

Optionally, the first signal includes one of the following:

a communication-dominant signal;
a sensing-dominant signal;
a sensing-enhanced communication-dominant signal; and
an integrated communication and sensing signal; and
a waveform of the first signal is a continuous wave waveform or a pulse waveform.

Optionally, the preprocessing the echo signal to obtain an echo preprocessing result includes:

in each sensing signal cycle, performing matched filtering processing on the echo signal received by the first communication device;

dividing a maximum detection distance of the first communication device into $N_m$ distance resolution cells, obtaining received echo power of the echo signal on each distance resolution cell in each sensing signal cycle, and generating a received echo data matrix;

summating each column of the received echo data matrix to obtain a $1 \times N_m$, vector, where the vector represents total received power on various distance resolution cells within duration of a sensing signal frame; and

summating the total received power on various distance resolution cells within the duration of the sensing signal frame to obtain total received echo power on the $N_m$ distance resolution cells within the duration of the sensing signal frame, where

the sensing signal frame includes $N_p$ sensing signal cycles, and the sensing signal cycle is a cycle for transmitting the first signal once and performing echo signal processing; and

the received echo data matrix is an $N_p \times N_m$ matrix, $N_p$ is a positive integer greater than 1, and $N_m$ is a positive integer greater than 1.

Optionally, the detecting rain or no rain in the area based on the echo preprocessing result and the rainfall decision threshold, performing the data preprocessing, and outputting the rainfall decision result and the rain or no-rain distribution detection result includes:

deciding, based on the first decision threshold, total received echo power of $N_m$ distance resolution cells within the duration of the sensing signal frame to determine whether there is rain or no rain, to obtain a first decision result;

in a case that the first decision result is rain, making a decision on received echo power on each distance resolution cell within the duration of the sensing signal frame based on the second decision threshold, to obtain a decision result on the received echo power on each distance resolution cell;

collecting statistics of decision results on the received echo power on various distance resolution cells, analyzing a quantity of threshold-crossing distance resolution cells based on a statistical result, and outputting the rainfall decision result; and

in a case that a ratio of the quantity of the threshold-crossing distance resolution cells to a total quantity of distance resolution cells exceeds a first threshold, performing a feature analysis on the threshold-crossing distance resolution cells, performing data preprocessing on a result of the feature analysis of the threshold-crossing distance resolution cells, and outputting the rain or no-rain distribution detection result.

Optionally, the performing a feature analysis on the threshold-crossing distance resolution cells, performing data preprocessing on a result of the feature analysis of the threshold-crossing distance resolution cells, and outputting the rain or no-rain distribution detection result in a case that a ratio of the quantity of the threshold-crossing distance resolution cells to a total quantity of distance resolution cells exceeds a first threshold includes:

collecting statistics of blocks (Block) and gaps (Gap) of all the distance resolution cells starting from a first threshold-crossing distance resolution cell, where the block is used to represent rain, and the gap is used to represent no rain, and obtaining $N_B$ blocks and $N_G$ gaps, each of which includes a quantity of distance resolution cells, where $N_B$ is a positive integer greater than or equal to 1, and $N_G$ is a positive integer greater than or equal to 1;

for an i-th block, in a case that the i-th block includes one distance resolution cell and that quantities of distance resolution cells included in two gaps adjacent to the i-th block meet a first preset condition, changing a decision result on the distance resolution cell included in the i-th block to "non-threshold-crossing", combining the i-th block and the two gaps adjacent to the i-th block into a new gap, and changing a received echo power value on the distance resolution cell included in the i-th block to an average value of received echo power on all the distance resolution cells in the two gaps adjacent to the i-th block;

for an i-th gap, in a case that the i-th gap includes one distance resolution cell and that quantities of distance resolution cells included in two blocks adjacent to the i-th gap meet the first preset condition, changing a decision result on the distance resolution cell included in the i-th gap to "threshold-crossing", combining the i-th gap and the two blocks adjacent to the i-th gap into a new block, and changing a received echo power value on the distance resolution cell included in the i-th gap to an average value of received echo power on all the distance resolution cells in the two blocks adjacent to the i-th gap; and

outputting a block set and a gap set, where

i is a natural number greater than or equal to 1;

in a case that the i-th block is a first block, only a first gap subsequent to the i-th block is considered; or in a case that the i-th block is a last block, only a gap previous to the i-th block is considered; and

in a case that the i-th gap is a first gap, only a first block subsequent to the i-th gap is considered; or in a case that the i-th gap is a last gap, only a block previous to the i-th gap is considered.

Optionally, the performing a procedure for detecting rainfall rate distribution based on the wet aperture attenuation value in a case that the rainfall decision result is rain includes:

calculating a volume scattering rate of each threshold-crossing distance resolution cell based on received echo power data obtained after the feature analysis of the threshold-crossing distance resolution cells and the data preprocessing, and the wet aperture attenuation value;

obtaining a scattering rate factor of each threshold-crossing distance resolution cell based on a Rayleigh scattering model and the volume scattering rate of each threshold-crossing distance resolution cell;

obtaining a rainfall rate of each threshold-crossing distance resolution cell based on the scattering rate factor of each threshold-crossing distance resolution cell and a relationship between the scattering rate factor and the rainfall rate; and

obtaining rainfall rate distribution in the current beam direction in a case of rain with reference to the rainfall rate of each threshold-crossing distance resolution cell.

Optionally, the performing a procedure for detecting rainfall rate distribution based on the wet aperture attenuation value in a case that the rainfall decision result is rain includes:

obtaining halfway rain attenuation of the echo signal on an i-th threshold-crossing distance resolution cell based on a rainfall rate of the first threshold-crossing distance resolution cell to a rainfall rate of an (i-1)-th threshold-crossing distance resolution cell, and a relationship between the rain attenuation and the rainfall rate, where i is a positive integer greater than 1;

calculating a volume scattering rate of the i-th threshold-crossing distance resolution cell based on the halfway rain attenuation of the echo signal on the i-th threshold-crossing distance resolution cell, received echo power data on the i-th threshold-crossing distance resolution cell, and the wet aperture attenuation value;

obtaining a scattering rate factor of the i-th threshold-crossing distance resolution cell based on a Rayleigh scattering model and the volume scattering rate of the i-th threshold-crossing distance resolution cell;

obtaining a rainfall rate of the i-th threshold-crossing distance resolution cell based on the scattering rate factor of the i-th threshold-crossing distance resolution cell and a relationship between the scattering rate factor and the rainfall rate;

adding 1 to i and calculating a rainfall rate of a next threshold-crossing distance resolution cell until rainfall rates of all the threshold-crossing distance resolution cells are obtained; and

obtaining rainfall rate distribution in the current beam direction in a case of rain with reference to the rainfall rates of all the threshold-crossing distance resolution cell, where

the rainfall rate of the first threshold-crossing distance resolution cell is obtained through calculation without considering halfway rain attenuation.

The echo signal processing algorithm based on the wideband radar distance resolution according to this embodiment of this application obtains the rainfall rate and rainfall rate distribution on the detection path based on the received echo power on each distance resolution cell and a scattering rate factor model of Rayleigh scattering. The algorithm has the following beneficial effects:

(1) A joint rain or no-rain decision based on the total received echo power and the received echo power on each distance resolution cell is proposed, to accurately detect whether it rains.
(2) A detected signal-to-noise ratio is increased based on coherent superposition of echoes in a plurality of sensing signal cycles within the sensing signal frame, and it is proposed that data preprocessing should be performed on the received echo power on each distance resolution cell based on the feature analysis of the threshold-crossing distance resolution cells, to improve accuracy of rainfall rate distribution detection.
(3) Considering impact of halfway rain attenuation on rainfall rate measurement, an iterative rain attenuation processing algorithm is proposed, and is especially suitable for scenarios with high carrier frequencies, long paths, or high rainfall intensity. The algorithm improves performance of rainfall rate detection.

Optionally, the sensing and measurement data includes at least one of the following:

a received echo data matrix;
total received power on various distance resolution cells within duration of a sensing signal frame;
total received echo power on $N_m$ distance resolution cells within the duration of the sensing signal frame, where $N_m$ is a positive integer greater than 1;
a result of a feature analysis of threshold-crossing distance resolution cells; and
received echo power data obtained after the feature analysis of the threshold-crossing distance resolution cells and data preprocessing.

The sensing result includes at least one of the following:

a rainfall decision result corresponding to each radiated beam direction;
a rain or no-rain distribution detection result corresponding to each radiated beam direction; and
rainfall rate distribution corresponding to each radiated beam direction in a case of rain.

In a case that the first communication device reports the sensing and measurement data, the radio frequency unit 1601 is further configured to:
report sensing assistance information to the second communication device, where the sensing assistance information includes:

location information of the first communication device;
sensing signal waveform configuration information;
a time for performing rainfall sensing; and
a radiated beam direction of the first communication device.

Optionally, the processor 1610 is further configured to:
obtain reference information about rainfall, where the reference information is used to determine a rainfall sensing error of the first communication device.
Optionally, the obtaining reference information about rainfall includes:

sending a first request message to the second communication device, where the first request message is used to request to obtain rainfall measurement data of a third-party station; and receiving the rainfall measurement data returned by the second communication device, and using the rainfall measurement data as the reference information; or
obtaining rainfall measurement data by using a rainfall measurement device configured for the first communication device, and using the rainfall measurement data as the reference information.

In this embodiment of this application, radar signal processing is performed by using self-transmission and self-reception by a mobile communication device, and rainfall detection and rainfall rate distribution detection are implemented with reference to a rain attenuation model, featuring a high temporal resolution and a high spatial resolution. In addition, this embodiment of this application proposes a feature analysis on threshold-crossing distance resolution cells for rainfall rate detection, data preprocessing on received echo power on each distance resolution cell, and an iterative rain attenuation processing algorithm, to improve performance of rainfall rate detection.

In another embodiment, the user input unit 1607 is configured to receive a first input performed by a user on a first application; and the processor 1610 is configured to send, in response to the first input, sensing requirement information to a second communication device through a server connected to the first application.

Optionally, the sensing requirement information is used to request weather sensing.

Optionally, the sensing requirement information includes at least one of the following:

sensing area location information, used to indicate a location of a sensing area;
a spatial resolution, used to indicate a spatial granularity of the weather sensing;
a temporal resolution, used to indicate a temporal granularity of the weather sensing; and
sensing repetition configuration information, indicating configuration information for repeating the weather sensing.

Optionally, the sensing repetition configuration information includes at least one of the following:

no repetition;
repetition within a first time range; and
repetition based on a first cycle until a termination condition is met.

Optionally, the weather sensing includes rainfall sensing, and the rainfall sensing includes at least one of the following: detecting rain or no rain in an area; detecting rain or no-rain distribution; and detecting rainfall rate distribution.

Optionally, the radio frequency unit 1601 is configured to:
receive rainfall in the sensing area, sent by the server connected to the first application.

In this embodiment of this application, the third communication device sends a weather sensing requirement to the application server in response to the input performed by the user, then the application server sends the weather sensing requirement to the second communication device, and the second communication device selects the first communication device for performing weather sensing, thereby meeting the user requirement for knowing about weather in real time.

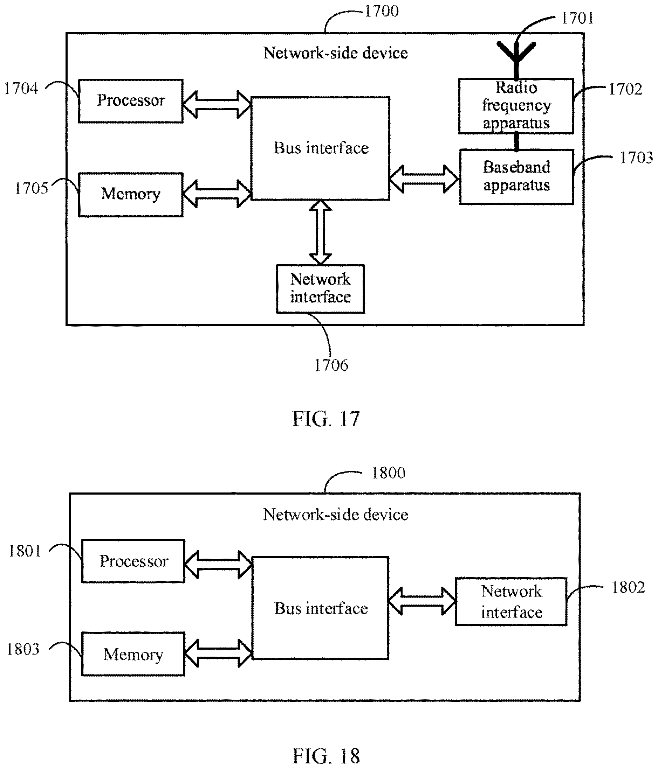

Specifically, an embodiment of this application further provides a network-side device. The network-side device may be a first communication device. As shown in FIG. 17, the network-side device 1700 includes an antenna 1701, a radio frequency apparatus 1702, a baseband apparatus 1703, a processor 1704, and a memory 1705. The antenna 1701 is connected to the radio frequency apparatus 1702. In an uplink direction, the radio frequency apparatus 1702 receives information by using the antenna 1701, and sends the received information to the baseband apparatus 1703 for processing. In a downlink direction, the baseband apparatus 1703 processes to-be-sent information, and sends the information to the radio frequency apparatus 1702; and the radio frequency apparatus 1702 processes the received information and then sends the information out by using the antenna 1701.

The method performed by the network-side device in the foregoing embodiment may be implemented in the baseband apparatus 1703. The baseband apparatus 1703 includes a baseband processor.

The baseband apparatus 1703 may include, for example, at least one baseband unit. A plurality of chips are disposed on the baseband unit. As shown in FIG. 17, one of the chips is, for example, the baseband processor, connected to the memory 1705 by using a bus interface, to invoke a program in the memory 1705 to perform operations of the network-side device shown in the foregoing method embodiment.

The network-side device may further include a network interface 1706, where the interface is, for example, a common public radio interface (common public radio interface, CPRI).

Specifically, the network-side device 1700 in this embodiment of this application further includes a program or instructions stored in the memory 1705 and executable on the processor 1704. When the processor 1704 invokes the program or instruction in the memory 1705, the method performed by each module shown in FIG. 11 is performed, with the same technical effect achieved. To avoid repetition, details are not described herein again.

Specifically, an embodiment of this application further provides a network-side device. The network-side device may be a second communication device. As shown in FIG. 18, the network-side device 1800 includes a processor 1801, a network interface 1802, and a memory 1803. The network interface 1802 is, for example, a common public radio interface (common public radio interface, CPRI).

Specifically, the network-side device 1800 in this embodiment of this application further includes a program or instructions stored in the memory 1803 and executable on the processor 1801. When the processor 1801 invokes the program or instruction in the memory 1803, the method performed by each module shown in FIG. 12 or FIG. 13 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing embodiment of the weather sensing method is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing the weather sensing method embodiment, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing embodiment of the weather sensing method, with the same technical effect achieved. To avoid repetition, details are not described herein again.

An embodiment of this application further provides a weather sensing system, including a first communication device, a second communication device, and a third communication device. The first communication device may be configured to perform the steps of the foregoing weather sensing method. The second communication device may be configured to perform the steps of the foregoing weather sensing method. The third communication device may be configured to perform the steps of the foregoing weather sensing method.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

**Claims**

1. A weather sensing method, comprising:

   in a case that a first condition is met, performing, by a first communication device, weather sensing to obtain sensing and measurement data or a sensing result; and
   reporting, by the first communication device, the sensing and measurement data or the sensing result to a second communication device, wherein
   the first condition comprises at least one of the following that:

sensing requirement information is received from the second communication device, wherein the sensing requirement information is used to request the weather sensing; and

a periodic sensing time arrives.

2. The weather sensing method according to claim 1, wherein the sensing requirement information comprises at least one of the following:

sensing area location information, used to indicate a location of a sensing area;

a spatial resolution, used to indicate a spatial granularity of the weather sensing;

a temporal resolution, used to indicate a temporal granularity of the weather sensing; and

sensing repetition configuration information, indicating configuration information for repeating the weather sensing.

3. The weather sensing method according to claim 2, wherein the sensing repetition configuration information comprises at least one of the following:

no repetition;

repetition within a first time range; and

repetition based on a first cycle until a termination condition is met.

4. The weather sensing method according to any one of claims 1 to 3, wherein the performing, by a first communication device, weather sensing to obtain sensing and measurement data or a sensing result comprises:

transmitting, by the first communication device, a first signal, and receiving an echo signal; and

processing, by the first communication device, the echo signal to obtain the sensing and measurement data or the sensing result.

5. The weather sensing method according to any one of claims 1 to 4, wherein the weather sensing comprises rainfall sensing, and the rainfall sensing comprises at least one of the following: detecting rain or no rain in an area; detecting rain or no-rain distribution; and detecting rainfall rate distribution.

6. The weather sensing method according to claim 5, wherein the performing, by a first communication device, weather sensing to obtain sensing and measurement data or a sensing result comprises:

determining a beam-pointing angle, transmitting a first signal based on the beam-pointing angle, and receiving an echo signal;

preprocessing the echo signal to obtain an echo preprocessing result;

detecting rain or no rain in the area and performing data preprocessing based on the echo preprocessing result and a rainfall decision threshold, and outputting a rainfall decision result and a rain or no-rain distribution detection result; and

in a case that the rainfall decision result is rain, detecting rainfall rate distribution based on a wet aperture attenuation value to obtain the rainfall rate distribution.

7. The weather sensing method according to claim 5 or 6, wherein in a case that the sensing requirement information is received from the second communication device, the performing, by a first communication device, weather sensing to obtain sensing and measurement data or a sensing result comprises:

obtaining baseline calibration data, wherein the baseline calibration data comprises a rainfall decision threshold and a wet aperture attenuation value;

determining a beam-pointing angle based on sensing area location information in the sensing requirement information or predetermined target area information in combination with location information of the first communication device;

transmitting a first signal based on the beam-pointing angle, and receiving an echo signal;

preprocessing the echo signal to obtain an echo preprocessing result;

detecting rain or no rain in the area and performing data preprocessing based on the echo preprocessing result and the rainfall decision threshold, and outputting a rainfall decision result and a rain or no-rain distribution detection result;

in a case that the rainfall decision result is rain, performing a procedure for detecting rainfall rate distribution based on the wet aperture attenuation value to obtain radial rainfall rate distribution that uses a radar detection distance resolution within a maximum coverage distance range of the first communication device as a resolution cell, and obtaining rainfall rate distribution at each position on a horizontal plane through projection based on an included angle between a radiated beam and the horizontal plane; and

in a case that the first communication device cannot completely cover the sensing area through one beam dwelling, adjusting the beam-pointing angle and performing rainfall sensing through a next beam dwelling until the sensing area is completely covered, to obtain a rainfall map and a rainfall rate distribution map in the sensing area.

8. The weather sensing method according to claim 5 or 6, wherein in a case that the periodic sensing time arrives, the performing, by a first communication device, weather sensing to obtain sensing and measurement data or a sensing result comprises:

obtaining baseline calibration data, wherein the baseline calibration data comprises a rainfall decision threshold and a wet aperture attenuation value;

transmitting a first signal based on an azimuth width of a radiated antenna beam, and receiving an echo signal;

preprocessing the echo signal to obtain an echo preprocessing result;

detecting rain or no rain in the area and performing data preprocessing based on the echo preprocessing result and the rainfall decision threshold, and outputting a rainfall decision result and a rain or no-rain distribution detection result;

in a case that the rainfall decision result is rain, performing a procedure for detecting rainfall rate distribution based on the wet aperture attenuation value to obtain radial rainfall rate distribution that uses a radar detection distance resolution within a maximum coverage distance range of the first communication device as a resolution cell, and obtaining rainfall rate distribution at each position on a horizontal plane through projection based on an included angle between a radiated beam and the horizontal plane;

after completing rainfall detection at an angle, terminating dwelling in a current beam direction, shifting the beam direction by an angle of one azimuth width and performing rainfall sensing in a next angular sector area until an azimuth covers an allowed maximum angle range, and then terminating rainfall sensing in a current cycle; and

performing fusion processing on rainfall sensing results in various beam directions to obtain a rainfall map and a rainfall rate distribution map in a circular area with the first communication device as a center and a maximum coverage distance of the first communication device as a radius.

9. The weather sensing method according to claim 7 or 8, wherein the rainfall decision threshold is obtained by using the following calibration method:

transmitting the first signal and receiving an echo in sunny weather and lightly rainy weather separately to obtain a first data matrix and a second data matrix whose sizes are $N_p \times N_m$ within duration of a sensing signal frame respectively, wherein $N_m$ values in each row of the first data matrix or in each row of the second data matrix are received echo power values on various distance resolution cells in one sensing signal cycle, $N_p$ values in each column are received echo power values on one distance resolution cell in different sensing signal cycles, $N_p$ is a positive integer greater than 1, and $N_m$ is a positive integer greater than 1;

summing each column of the first data matrix and the second data matrix separately to obtain first total received power and second total received power on various distance resolution cells within the duration of the sensing signal frame;

repeating in $N_b$ sensing signal frames to obtain first average values and second average values of received echo power on various distance resolution cells within first duration, wherein the first duration comprises the $N_b$ sensing signal frames, and $N_b$ is a positive integer greater than or equal to 1;

summing the first average values of the received echo power on various distance resolution cells within the first duration to obtain a third average value of total received echo power within the first duration, and summating the second average values of the received echo power on various distance resolution cells within the first duration to obtain a fourth average value of the total received echo power within the first duration;

obtaining a first decision threshold based on the third average value and the fourth average value of the total received echo power within the first duration, wherein the first decision threshold is used to decide the total received echo power within the duration of the sensing signal frame to determine whether there is rain or no rain; and

obtaining a second decision threshold based on the first average values and the second average values of the received echo power on various distance resolution cells within the first duration, wherein the second decision threshold is used to make a decision on the received echo power on various distance resolution cells.

10. The weather sensing method according to any one of claims 4 and 6 to 8, wherein the first signal comprises one of the following:

a communication-dominant signal;
a sensing-dominant signal;
a sensing-enhanced communication-dominant signal; and
an integrated communication and sensing signal; and
a waveform of the first signal is a continuous wave waveform or a pulse waveform.

11. The weather sensing method according to claim 7 or 8, wherein the preprocessing the echo signal to obtain an echo preprocessing result comprises:

in each sensing signal cycle, performing matched filtering processing on the echo signal received by the first communication device;
dividing a maximum detection distance of the first communication device into $N_m$ distance resolution cells, obtaining received echo power of the echo signal on each distance resolution cell in each sensing signal cycle, and generating a received echo data matrix;
summing each column of the received echo data matrix to obtain a $1 \times N_m$ vector, wherein the vector represents total received power on various distance resolution cells within duration of a sensing signal frame; and
summing the total received power on various distance resolution cells within the duration of the sensing signal frame to obtain total received echo power on the $N_m$ distance resolution cells within the duration of the sensing signal frame, wherein
the sensing signal frame comprises $N_p$ sensing signal cycles, and a sensing signal cycle is a cycle for transmitting the first signal once and performing echo signal processing; and
the received echo data matrix is an $N_p \times N_m$ matrix, $N_p$ is a positive integer greater than 1, and $N_m$ is a positive integer greater than 1.

12. The weather sensing method according to claim 9, wherein the detecting rain or no rain in the area and performing data preprocessing based on the echo preprocessing result and the rainfall decision threshold, and outputting a rainfall decision result and a rain or no-rain distribution detection result comprises:

deciding, based on the first decision threshold, total received echo power of $N_m$ distance resolution cells within the duration of the sensing signal frame to determine whether there is rain or no rain, to obtain a first decision result;
in a case that the first decision result is rain, making a decision on received echo power on each distance resolution cell within the duration of the sensing signal frame based on the second decision threshold, to obtain a decision result on the received echo power on each distance resolution cell;
collecting statistics of decision results on the received echo power on various distance resolution cells, analyzing a quantity of threshold-crossing distance resolution cells based on a statistical result, and outputting the rainfall decision result; and
in a case that a ratio of the quantity of the threshold-crossing distance resolution cells to a total quantity of distance resolution cells exceeds a first threshold, performing a feature analysis on the threshold-crossing distance resolution cells, performing data preprocessing on a result of the feature analysis of the threshold-crossing distance resolution cells, and outputting the rain or no-rain distribution detection result.

13. The weather sensing method according to claim 12, wherein the performing a feature analysis on the threshold-crossing distance resolution cells, performing data preprocessing on a result of the feature analysis of the threshold-crossing distance resolution cells, and outputting the rain or no-rain distribution detection result in a case that a ratio of the quantity of the threshold-crossing distance resolution cells to a total quantity of distance resolution cells exceeds a first threshold comprises:

collecting statistics of blocks and gaps of all the distance resolution cells starting from a first threshold-crossing distance resolution cell, wherein a block is used to represent rain, and a gap is used to represent no rain, and obtaining $N_B$ blocks and $N_G$ gaps, each of which comprises a quantity of distance resolution cells, wherein $N_B$ is a positive integer greater than or equal to 1, and $N_G$ is a positive integer greater than or equal to 1;
for an i-th block, in a case that the i-th block comprises one distance resolution cell and that quantities of distance resolution cells comprised in two gaps adjacent to the i-th block meet a first preset condition, changing a decision result on the distance resolution cell comprised in the i-th block to "non-threshold-crossing", combining the i-th block and the two gaps adjacent to the i-th block into a new gap, and changing a received echo power value on the distance resolution cell comprised in the i-th block to an average value of received echo power on all the distance resolution cells in the two gaps adjacent to the i-th block;

for an i-th gap, in a case that the i-th gap comprises one distance resolution cell and that quantities of distance resolution cells comprised in two blocks adjacent to the i-th gap meet the first preset condition, changing a decision result on the distance resolution cell comprised in the i-th gap to "threshold-crossing", combining the i-th gap and the two blocks adjacent to the i-th gap into a new block, and changing a received echo power value on the distance resolution cell comprised in the i-th gap to an average value of received echo power on all the distance resolution cells in the two blocks adjacent to the i-th gap; and

outputting a block set and a gap set, wherein

i is a natural number greater than or equal to 1;

in a case that the i-th block is a first block, only a first gap subsequent to the i-th block is considered; or in a case that the i-th block is a last block, only a gap previous to the i-th block is considered; and

in a case that the i-th gap is a first gap, only a first block subsequent to the i-th gap is considered; or in a case that the i-th gap is a last gap, only a block previous to the i-th gap is considered.

14. The weather sensing method according to claim 13, wherein the performing a procedure for detecting rainfall rate distribution based on the wet aperture attenuation value in a case that the rainfall decision result is rain comprises:

calculating a volume scattering rate of each threshold-crossing distance resolution cell based on received echo power data obtained after the feature analysis of the threshold-crossing distance resolution cells and the data preprocessing, and the wet aperture attenuation value;

obtaining a scattering rate factor of each threshold-crossing distance resolution cell based on a Rayleigh scattering model and the volume scattering rate of each threshold-crossing distance resolution cell;

obtaining a rainfall rate of each threshold-crossing distance resolution cell based on the scattering rate factor of each threshold-crossing distance resolution cell and a relationship between the scattering rate factor and the rainfall rate; and

obtaining rainfall rate distribution in a current beam direction in a case of rain with reference to the rainfall rate of each threshold-crossing distance resolution cell.

15. The weather sensing method according to claim 13, wherein the performing a procedure for detecting rainfall rate distribution based on the wet aperture attenuation value in a case that the rainfall decision result is rain comprises:

obtaining halfway rain attenuation of an echo signal on an i-th threshold-crossing distance resolution cell based on a rainfall rate of a first threshold-crossing distance resolution cell to a rainfall rate of an (i-1)-th threshold-crossing distance resolution cell, and a relationship between the rain attenuation and the rainfall rate, wherein i is a positive integer greater than 1;

calculating a volume scattering rate of the i-th threshold-crossing distance resolution cell based on the halfway rain attenuation of the echo signal on the i-th threshold-crossing distance resolution cell, received echo power data on the i-th threshold-crossing distance resolution cell, and the wet aperture attenuation value;

obtaining a scattering rate factor of the i-th threshold-crossing distance resolution cell based on a Rayleigh scattering model and the volume scattering rate of the i-th threshold-crossing distance resolution cell;

obtaining a rainfall rate of the i-th threshold-crossing distance resolution cell based on the scattering rate factor of the i-th threshold-crossing distance resolution cell and a relationship between the scattering rate factor and the rainfall rate;

adding 1 to i and calculating a rainfall rate of a next threshold-crossing distance resolution cell until rainfall rates of all the threshold-crossing distance resolution cells are obtained; and

obtaining rainfall rate distribution in the current beam direction in a case of rain with reference to the rainfall rates of all the threshold-crossing distance resolution cell, wherein

the rainfall rate of the first threshold-crossing distance resolution cell is obtained through calculation without considering halfway rain attenuation.

16. The weather sensing method according to claim 5, wherein the sensing and measurement data comprises at least one of the following:

a received echo data matrix;

total received power on various distance resolution cells within duration of a sensing signal frame;

total received echo power on $N_m$ distance resolution cells within the duration of the sensing signal frame, wherein

$N_m$ is a positive integer greater than 1;
a result of a feature analysis of threshold-crossing distance resolution cells; and
received echo power data obtained after the feature analysis of the threshold-crossing distance resolution cells and data preprocessing.

17. The weather sensing method according to claim 5, wherein the sensing result comprises at least one of the following:

a rainfall decision result corresponding to each radiated beam direction;
a rain or no-rain distribution detection result corresponding to each radiated beam direction; and
rainfall rate distribution corresponding to each radiated beam direction in a case of rain.

18. The weather sensing method according to claim 5, wherein in a case that the first communication device reports the sensing and measurement data, the method further comprises:

reporting, by the first communication device, sensing assistance information to the second communication device, wherein the sensing assistance information comprises:

location information of the first communication device;
sensing signal waveform configuration information;
a time for performing rainfall sensing; and
a radiated beam direction of the first communication device.

19. The weather sensing method according to claim 5, wherein the method further comprises:
obtaining, by the first communication device, reference information about rainfall, wherein the reference information is used to determine a rainfall sensing error of the first communication device.

20. The weather sensing method according to claim 19, wherein the obtaining, by the first communication device, reference information about rainfall comprises:

sending a first request message to the second communication device, wherein the first request message is used to request to obtain rainfall measurement data of a third-party station; and receiving the rainfall measurement data returned by the second communication device, and using the rainfall measurement data as the reference information;
or
obtaining rainfall measurement data by using a rainfall measurement device configured for the first communication device, and using the rainfall measurement data as the reference information.

21. The weather sensing method according to any one of claims 1 to 20, wherein the first communication device is a terminal, a base station, or a transmission and reception point TRP; and the second communication device is a core network element or a sensing function network element.

22. A weather sensing method, comprising:

receiving, by a second communication device, sensing requirement information sent by a third communication device, wherein the sensing requirement information is used to request weather sensing;
determining, by the second communication device based on the sensing requirement information, at least one first communication device for performing the weather sensing;
forwarding, by the second communication device, the sensing requirement information to the first communication device; and
receiving, by the second communication device, sensing and measurement data or a sensing result reported by the first communication device;
or
periodically receiving, by the second communication device, sensing and measurement data or a sensing result reported by the first communication device.

23. The weather sensing method according to claim 22, wherein the sensing requirement information comprises at least one of the following:

sensing area location information, used to indicate a location of a sensing area;
a spatial resolution, used to indicate a spatial granularity of the weather sensing;
a temporal resolution, used to indicate a temporal granularity of the weather sensing; and
sensing repetition configuration information, indicating configuration information for repeating the weather sensing.

24. The weather sensing method according to claim 23, wherein the sensing repetition configuration information comprises at least one of the following:

no repetition;
repetition within a first time range; and
repetition based on a first cycle until a termination condition is met.

25. The weather sensing method according to any one of claims 22 to 24, wherein the weather sensing comprises rainfall sensing, and the rainfall sensing comprises at least one of the following: detecting rain or no rain in an area; detecting rain or no-rain distribution; and detecting rainfall rate distribution.

26. The weather sensing method according to claim 25, wherein the method further comprises:

performing fusion processing on sensing results reported by each first communication device, to obtain rainfall in the sensing area or a target area; and
sending the rainfall in the sensing area or the target area to the third communication device through a server connected to a first application on the third communication device.

27. The weather sensing method according to claim 26, wherein before the performing fusion processing on sensing results reported by each first communication device, the method further comprises:
obtaining, by the second communication device, the sensing result through calculation based on the sensing and measurement data.

28. The weather sensing method according to claim 25, wherein the method further comprises:

obtaining, by the second communication device, reference information about rainfall;
determining, by the second communication device, a rainfall sensing error of the first communication device based on the sensing result and the reference information; and
sending, by the second communication device, the rainfall sensing error of the first communication device to other sensing nodes within an area around the first communication device.

29. The weather sensing method according to claim 25, wherein the sensing and measurement data comprises at least one of the following:

a received echo data matrix;
total received power on various distance resolution cells within duration of a sensing signal frame;
total received echo power on $N_m$ distance resolution cells within the duration of the sensing signal frame, wherein $N_m$ is a positive integer greater than 1;
a result of a feature analysis of threshold-crossing distance resolution cells; and
received echo power data obtained after the feature analysis of the threshold-crossing distance resolution cells and data preprocessing.

30. The weather sensing method according to claim 25, wherein the sensing result comprises at least one of the following:

a rainfall decision result corresponding to each radiated beam direction;
a rain or no-rain distribution detection result corresponding to each radiated beam direction; and
rainfall rate distribution corresponding to each radiated beam direction in a case of rain.

31. The weather sensing method according to claim 29, wherein in a case that the first communication device reports the sensing and measurement data, the method further comprises:
receiving, by the second communication device, sensing assistance information reported by the first communication device, wherein the sensing assistance information comprises:

location information of the first communication device;
sensing signal waveform configuration information;
a time for performing rainfall sensing; and
a radiated beam direction of the first communication device.

32. The weather sensing method according to any one of claims 22 to 31, wherein the first communication device is a terminal, a base station, or a transmission and reception point TRP; and the second communication device is a core network element or a sensing function network element.

33. A weather sensing method, comprising:

receiving, by a third communication device, a first input performed by a user on a first application; and
sending, by the third communication device in response to the first input, sensing requirement information to a second communication device through a server connected to the first application, wherein
the sensing requirement information is used to request weather sensing.

34. The weather sensing method according to claim 33, wherein the sensing requirement information comprises at least one of the following:

sensing area location information, used to indicate a location of a sensing area;
a spatial resolution, used to indicate a spatial granularity of the weather sensing;
a temporal resolution, used to indicate a temporal granularity of the weather sensing; and
sensing repetition configuration information, indicating configuration information for repeating the weather sensing.

35. The weather sensing method according to claim 34, wherein the sensing repetition configuration information comprises at least one of the following:

no repetition;
repetition within a first time range; and
repetition based on a first cycle until a termination condition is met.

36. The weather sensing method according to any one of claims 33 to 35, wherein the weather sensing comprises rainfall sensing, and the rainfall sensing comprises at least one of the following: detecting rain or no rain in an area; detecting rain or no-rain distribution; and detecting rainfall rate distribution.

37. The weather sensing method according to claim 36, wherein the method further comprises:
receiving, by the third communication device, rainfall in the sensing area, sent by the server connected to the first application.

38. A weather sensing apparatus, comprising:

a weather sensing module, configured to perform weather sensing to obtain sensing and measurement data or a sensing result in a case that a first condition is met; and
a first sending module, configured to report the sensing and measurement data or the sensing result to a second communication device, wherein
the first condition comprises at least one of the following that:

sensing requirement information is received from the second communication device, wherein the sensing requirement information is used to request the weather sensing; and
a periodic sensing time arrives.

39. A weather sensing apparatus, comprising:

a first receiving module, configured to receive sensing requirement information sent by a third communication device, wherein the sensing requirement information is used to request weather sensing;
a selection module, configured to determine, based on the sensing requirement information, at least one first communication device for performing the weather sensing;

a second sending module, configured to forward the sensing requirement information to the first communication device; and

a second receiving module, configured to receive sensing and measurement data or a sensing result reported by the first communication device;

or

a third receiving module, configured to periodically receive sensing and measurement data or a sensing result reported by the first communication device.

40. A weather sensing apparatus, comprising:

a fourth receiving module, configured to receive a first input performed by a user on a first application; and
a first processing module, configured to send, in response to the first input, sensing requirement information to a second communication device through a server connected to the first application, wherein
the sensing requirement information is used to request weather sensing.

41. A communication device, comprising a processor and a memory, wherein a program or instructions are stored in the memory and executable on the processor, and when the program or the instructions are executed by the processor, steps of the weather sensing method according to any one of claims 1 to 37 are implemented.

42. A readable storage medium, wherein the readable storage medium stores a program or instructions, and when the program or the instructions are executed by a processor, steps of the weather sensing method according to any one of claims 1 to 37 are implemented.

FIG. 1

(a)　　　　　　　　　　　　　　　(b)

FIG. 2

$\Delta R$

$\theta_3$

$\phi_3$

Radar

$R$

FIG. 3

| In a case that a first condition is met, a first communication device performs weather sensing to obtain sensing and measurement data or a sensing result | 400 |
|---|---|
| ↓ | |
| The first communication device reports the sensing and measurement data or the sensing result to a second communication device | 401 |

FIG. 4

Third-party application

Application server

Core network element

Sensing function
network element

Base
station

FIG. 5

FIG. 6

FIG. 7

| A second communication device receives sensing requirement information sent by a third communication device, where the sensing requirement information is used to request weather sensing | ⟋ 800 |

↓

| The second communication device determines, based on the sensing requirement information, at least one first communication device for performing weather sensing | ⟋ 801 |

↓

| The second communication device forwards the sensing requirement information to the first communication device | ⟋ 802 |

↓

| The second communication device receives sensing and measurement data or a sensing result reported by the first communication device | ⟋ 803 |

FIG. 8

Start

| A second communication device periodically receives sensing and measurement data or a sensing result reported by a first communication device | ⟋ 900 |

End

FIG. 9

A third communication device receives a first input performed by a user on a first application ⟋1000

The third communication device sends, in response to the first input, sensing requirement information to a second communication device through a server connected to the first application ⟋1001

FIG. 10

⟋1100

⟋1110    ⟋1120

| Weather sensing module | First sending module |

Weather sensing apparatus

FIG. 11

⟋1200

⟋1210    ⟋1220    ⟋1230    ⟋1240

| First receiving module | Selection module | Second sending module | Second receiving module |

Weather sensing apparatus

FIG. 12

—1300

—1310

Third receiving module

Weather sensing apparatus

FIG. 13

—1400

—1410 —1420

Fourth receiving module

First processing module

Weather sensing apparatus

FIG. 14

— 1500

Communication device

1501 Processor ⟺ Memory 1502

FIG. 15

1600

1601 — Radio frequency unit

1602 — Network module

1610 — 

Memory

1609 — Application program

Operating system

1608 — Interface unit

Processor

1603 — Audio output unit

1604 — Input unit

Graphics processing unit — 16041

Microphone — 16042

1607 — User input unit

16071 — Touch panel

16072 — Other input devices

1606 — Display unit

Display panel — 16061

Sensor — 1605

FIG. 16

FIG. 17

FIG. 18

## INTERNATIONAL SEARCH REPORT

| | International application No. |
|---|---|
| | **PCT/CN2022/134219** |

| **A.** | **CLASSIFICATION OF SUBJECT MATTER** |
|---|---|

H04B 17/382(2015.01)i

According to International Patent Classification (IPC) or to both national classification and IPC

| **B.** | **FIELDS SEARCHED** |
|---|---|

Minimum documentation searched (classification system followed by classification symbols)

IPC: H04B H04W H04L

Documentation searched other than minimum documentation to the extent that such documents are included in the fields searched

Electronic data base consulted during the international search (name of data base and, where practicable, search terms used)

CNTXT; CNKI; ENTXT; ENTXTC; 3GPP: 测量, 感测, 感知, 回波, 检测, 降雨, 雷达, 气象, 请求, 上报, 天气, 通信, 预报, icas, integrated, isac, weather, communicat+, sens+, detect+

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 108387953 A (SOOCHOW UNIVERSITY) 10 August 2018 (2018-08-10) description, paragraphs 5-21 and 35-53 | 1-5, 21-25, 32-42 |
| A | CN 110611527 A (BEIJING UNIVERSITY OF POSTS AND TELECOMMUNICATIONS) 24 December 2019 (2019-12-24) entire document | 1-42 |
| A | CN 112748425 A (HUAWEI TECHNOLOGIES CO., LTD.) 04 May 2021 (2021-05-04) entire document | 1-42 |
| A | US 2021003743 A1 (CLIMATE CORPORATION) 07 January 2021 (2021-01-07) entire document | 1-42 |
| A | CHINA MOBILE. ""New SID on Integrated Sensing and Communication"" *3GPP SA WG1 Meeting #96e S1-214036*, 28 October 2021 (2021-10-28), entire document | 1-42 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 February 2023** | **22 February 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/134219**

| Patent document cited in search report | | | Publication date (day/month/year) | Patent family member(s) | | | Publication date (day/month/year) |
|---|---|---|---|---|---|---|---|
| CN | 108387953 | A | 10 August 2018 | None | | | |
| CN | 110611527 | A | 24 December 2019 | None | | | |
| CN | 112748425 | A | 04 May 2021 | None | | | |
| US | 2021003743 | A1 | 07 January 2021 | US | 11555945 | B2 | 17 January 2023 |

Form PCT/ISA/210 (patent family annex) (July 2022)

**REFERENCES CITED IN THE DESCRIPTION**

**Patent documents cited in the description**

- CN 2021114340348